# EUROPÄISCHE PATENTSCHRIFT

(11) **EP 1 064 314 B1**
(45) Veröffentlichungstag und Bekanntmachung des Hinweises auf die Patenterteilung: **15.05.2002**
(21) Anmeldenummer: 99911815.1
(22) Anmeldetag: 23.03.1999
(51) Int. Cl.: C08G 18/08, C08G 18/10, C08G 18/48

(54) **LÖSEMITTELFREIE POLYURETHAN-DISPERSION**
SOLVENT-FREE POLYURETHANE DISPERSION
DISPERSION DE POLYURETHANNE SANS SOLVANT

(30) Priorität: 24.03.1998 DE 19812751
(43) Veröffentlichungstag der Anmeldung: 03.01.2001
(73) Patentinhaber: Degussa Construction Chemicals GmbH, 83308 Trostberg (DE)
(72) Erfinder: MAIER, Alois, D-84549 Engelsberg (DE); WOLFERTSTETTER, Franz, D-83349 Palling (DE); WINKELMANN, Herbert, D-84518 Garching (DE); WEICHMANN, Josef, D-84568 Pleiskirchen (DE); KERN, Alfred, D-84558 Kirchweidach (DE)
(74) Vertreter: Weiss, Wolfgang, Dipl.-Chem. Dr.
(86) Internationale Anmeldenummer: EP9901985
(87) Internationale Veröffentlichungsnummer: WO9950325

(56) Entgegenhaltungen:
- EP-A- 0 498 218
- EP-A- 0 666 275
- EP-A- 0 700 945
- WO-A-91/11477
- WO-A-97/10274
- US-A- 5 656 701

## Beschreibung

Die vorliegende Erfindung betrifft eine lösemittelfreie Polyurethan-Dispersion mit einem hohen Feststoffgehalt an Polyurethan-Polymer oder Füllstoffen, ein Verfahren zur Herstellung solcher Polyurethan-Dispersionen sowie deren Verwendung im Baubereich für einkomponentige, isocyanat- und lösemittelfreie Beschichtungen, Dichtstoffe, Klebstoffe oder Membranen.

Aus Gründen des Umweltschutzes und im Hinblick auf Einhaltung bestehender Emissionsrichtlinien wurden in den letzten Jahren erhebliche Anstrengungen zur Entwicklung von wasserbasierenden Polyurethan-Dispersionen mit einem möglichst geringen Gehalt an flüchtigen organischen Lösemitteln (VOC, volatile organic compounds) unternommen. Diese lösemittelarmen (low VOC) oder lösemittelfreien (zero VOC) Produkte bieten sowohl ökologische als auch ökonomische Vorteile und entsprechen in ihrer Performance bereits weitgehend den lösemittelhaltigen Produkten. Die exzellenten Material-Eigenschaften der Polyurethan-Dispersionen ermöglichen eine Vielzahl von Anwendungsmöglichkeiten für diese Bindemittel.

Auch in bauchemischen Anwendungen, wie Lacken, Beschichtungen, Dichtmassen und Klebstoffen, gewinnen Polyurethan-Dispersionen immer mehr an Bedeutung. In der Bauchemie werden insbesondere lösemittelfreie Polyurethan-Dispersionen mit einem hohen Feststoff-Gehalt an Polyurethan-Polymer oder Füllstoffen gewünscht, die mit Hilfe von rationellen und zugleich universellen Herstellungsverfahren zugänglich gemacht werden können.

Die Herstellung von wäßrigen Polyurethan-Dispersionen ist seit vielen Jahren bekannt und wird in einer großen Zahl von Veröffentlichungen im Detail beschrieben, z.B. Houben-Weyl, Methoden der organischen Chemie, Band E 20, Teil I, S. 1659-1681; D. Dieterich, Prog. Org. Coat. 1981, 9, 281-330; J. W. Rosthauser, K. Nachtkamp, Journal Of Coated Fabrics 1986, 16, 39-79; R. Arnoldus, Surf. Coat. 1990, 3 (Waterborne Coat.), 179-98.

Wäßrige Polyurethan-Dispersionen bestehen aus Polyurethan-Polymeren bzw. Polyurethan-Polyharnstoff-Polymeren, die sowohl Urethan-Gruppen als auch Harnstoff-Gruppen beinhalten und durch Polyadditions-Reaktionen von Polyolen, Polyisocyanaten und Polyaminen zugänglich sind. Aus den Polyolen und den Polyisocyanaten werden zunächst Polyurethan-Prepolymere hergestellt, die dann in der wäßrigen Phase dispergiert und mit Polyaminen unter Aufbau der Polyurethan-Polyharnstoff-Polymere kettenverlängert werden. Die Polyurethan-Polymere enthalten zudem eine ausreichende Menge an hydrophilen Gruppen, welche die Stabilisierung in der wäßrigen Phase gewährleisten. Bei diesen hydrophilen Gruppen kann es sich um anionische, kationische und/oder nicht-ionische Gruppen handeln. Die Ladungsdichte der hydrophilen Gruppen in Bezug auf das Polyurethan-Polymer hängt von der Charakteristik und der Stöchiometrie der verwendeten Aufbau-Komponenten ab. Polyurethan-Dispersionen stellen Zweiphasen-Systeme dar, die aus Micellen mit Polyurethan-Polymeren und einer wäßrigen Phase bestehen. Bei der Auftrocknung der Polyurethan-Dispersionen erfolgt eine Koaleszenz bzw. Verschmelzung der Micellen und eine Filmbildung bzw. Verfilmung der Polyurethan-Polymeren.

Für die Herstellung von Polyurethan-Dispersionen in der Technik haben der Prepolymer Mixing Process und der Solvent Process die größte Bedeutung erlangt.

Diese konventionellen Verfahren zur Herstellung von; Polyurethan-Dispersionen sind jedoch mit verschiedenen Problemen behaftet.

Bei dem sog. Prepolymer Mixing Process bzw. Prepolymer-Misch-Verfahren werden zur Verringerung der Viskosität der Polyurethan-Prepolymere signifikante Mengen an hochsiedenden und wasserlöslichen Solventien, wie bspw. N-Methyl-pyrrolidon, zugesetzt. Diese Lösemittel verbleiben nach dem Herstellungsprozeß in der Polyurethan-Dispersion. Bei der Auftrocknung der Polyurethan-Dispersionen bzw. der daraus hergestellten Produkte werden diese Lösemittel an die Umwelt abgegeben. Neben dem vorhandenen Lösemittel-Gehalt sind die niedrigen Feststoff-Gehalte, die zumeist moderaten Material-Eigenschaften und die großen Mengen der zur Stabilisierung der Polyurethan-Dispersionen benötigten hydrophilen Gruppen von Nachteil. Der Prepolymer Mixing Process stellt jedoch ein einfaches und rationelles Herstellungsverfahren mit einer großen synthetischen Bandbreite dar, was in vielen Fällen von großem Vorteil ist.

Bei dem sog. Solvent Process bzw. Aceton-Verfahren wird der komplette Aufbau der Polyurethan-Polymere in Gegenwart von großen Mengen an niedrigsiedenden und wasserlöslichen Solventien, wie bspw. Aceton oder Methylethylketon, durchgeführt. Die Solventien müssen nach der Herstellung der Polyurethan-Dispersion durch eine aufwendige Redestillation wieder entfernt werden, die resultierenden Polyurethan-Dispersionen sind daher weitgehend lösemittelfrei. Neben der Lösemittel-Freiheit sind die hohen Feststoff-Gehalte, die exzellenten Material-Eigenschaften und die geringen Mengen der zur Stabilisierung der Polyurethan-Dispersionen benötigten hydrophilen Gruppen von Vorteil. Der Solvent Process stellt jedoch ein kompliziertes und wirtschaftlich nicht optimales Herstellungsverfahren mit einer geringen Raum/Zeit-Ausbeute dar, was gerade im Hinblick auf bauchemische Anwendungen von großem Nachteil ist.

Daneben existieren noch verschiedene Kombinationen aus Prepolymer Mixing Process und Solvent Process, die jedoch eine ähnliche Problematik aufweisen. So kann beim Prepolymer Mixing Process ein Gemisch aus niedrig- und hochsiedenden Solventien eingesetzt werden oder beim Solvent Process der komplette Aufbau der Polyurethan-Dispersion in die wäßrige Phase verlegt werden. Die zuvor genannten Probleme können jedoch auch mit diesen Methoden nicht beseitigt werden.

In neuerer Zeit gibt es zunehmend Bestrebungen seitens der Hersteller von Polyurethan-Dispersionen, Solventien wie N-Methyl-pyrrolidon durch ökologisch unbedenkliche und nicht kennzeichnungspflichtige Glykolether, wie bspw. Dipropylenglykoldimethylether (Proglyde DMM® der Fa. Dow) zu ersetzen. Eine derartige Umstellung führt jedoch zu einer Erhöhung der Kostenstruktur beim Prepolymer Mixing Process.

In den Patentanmeldungen EP-A-0 712 877 und EP-A-0 808 859 werden lösemittelfreie Polyurethan-Dispersionen mit hohen Feststoff-Gehalten beschrieben, die auf Basis eines modifizierten Solvent Process hergestellt werden. Diese Polyurethan-Dispersionen werden zur Herstellung von Dichtmassen und spritzbaren Abdichtungen verwendet. Das zur Herstellung der Polyurethan-Dispersionen verwendete Verfahren ist jedoch auf Polypropylenglykole beschränkt und nicht auf weitere polymere Polyole übertragbar. Bei der Herstellung dieser Polyurethan-Dispersionen wird eine simultane Dispergierung und Kettenverlängerung in der wäßrigen Phase vorgenommen, anschließend wird das enthaltene Solvens durch Destillation wieder entfernt. Die beschriebenen Beispiele beinhalten ausschließlich Polyurethan-Dispersionen, die mit Hilfe von Wasser kettenverlängert werden. Aus der Chemie und der Technologie der Polyurethan-Dispersionen ist jedoch bekannt, daß eine derartige Vorgehensweise gravierende Probleme aufwirft. Auf Grund von polaren Wechselwirkungen wird bei Polyurethan-Dispersionen auf Basis von Polypropylenglykolen die Redestillation von Solventien, wie bspw. Aceton oder Methylethylketon, beträchtlich erschwert. Die Kettenverlängerung mit Wasser führt bekanntermaßen zu Produkten mit geringerer Lagerstabilität und Reproduzierbarkeit. Durch die starke Gasentwicklung der lsocyanat/Wasser-Reaktion bei der Kettenverlängerung wird die Redestillation der Solventien noch weiter erschwert.

Aus der EP-A-0 741 152 sind Polyurethan-Dispersionen auf Basis von verschiedenen Polypropylenglykolen mit einem vergleichsweise geringen Grad an Ungesättigtheit bzw. einen niedrigen Gehalt an Monolen bekannt. Diese Polyurethan-Dispersionen werden nach dem Prepolymer Mixing Process hergestellt, beinhalten N-Methyl-pyrrolidon als Lösemittel und weisen nur geringe Feststoff-Gehalte auf.

Die DE-OS 4011 455 offenbart lösemittelfreie Polyurethan-Dispersionen auf Basis von Polyalkylenglykol-Gemischen. Diese Polyurethan-Dispersionen werden über relativ niedrige NCO/OH-Equivalent-Verhältnisse hergestellt und weisen demgemäß niedrige Feststoff-Gehalte und hohe Viskositäten auf.

Polyurethan-Dispersionen mit geringem VOC-Gehalt werden auch in der EP-A-0 553 714 beschrieben. Diese Polyurethan-Dispersionen basieren auf verschiedenen polymeren Polyolen und 1,3-Bis-(1-isocyanato-1-methylethyl)-benzol (m-TMXDI) und enthalten ggf. N-Methyl-pyrrolidon. Die Herstellung erfolgt nach dem Prepolymer Mixing Process unter Verwendung niedriger NCO/OH-Equivalent-Verhältnisse. Der Feststoff-Gehalt dieser Systeme ist relativ gering.

Schließlich sind aus der US-PS 5 656 701 lösemittelarme bzw. lösemittelfreie anionische und kationische Polyurethan-Dispersionen auf Basis verschiedener polymerer Polyole bekannt, die mit Hilfe des Prepolymer Mixing Process oder des Solvent Process mit niedrigen NCO/OH-Equivalent-Verhältnissen hergestellt werden. Für die Kettenverlängerung bzw. Kettenstoppung werden ausschließlich Hydrazin-Derivate eingesetzt. Der beanspruchte Feststoff-Gehalt dieser Systeme liegt bei maximal 50 Gew.-%, die angegebenen Beispiele liefern jedoch nur Produkte mit maximal 40 Gew.-% Feststoff-Gehalt an Polyurethan-Polymer.

Der vorliegenden Erfindung lag daher die Aufgabe zugrunde, eine lösemittelfreie Polyurethan-Dispersion mit einem hohen Feststoffgehalt an Polyurethan-Polymer oder Füllstoffen zu entwickeln, welche die genannten Nachteile des Standes der Technik nicht aufweist, sondern gute anwendungstechnische Eigenschaften besitzt und gleichzeitig auf kostengünstige und umweltschonende Weise hergestellt werden kann.

Diese Aufgabe wurde erfindungsgemäß durch die Bereitstellung einer lösemittelfreien Polyurethan-Dispersion gelöst, die dadurch erhältlich ist, daß man
**a**) 10 bis 50 Gew.-% einer höhermolekularen Polyol-Komponente (A) (i), die mindestens zwei gegenüber Polyisocyanaten reaktive Hydroxylgruppen und eine Molekularmasse von 500 bis 6 000 Dalton aufweist, sowie ggf. 0,5 bis 5 Gew.-% einer niedermolekularen Polyol-Komponente (A) (ii), die mindestens zwei gegenüber Polyisocyanaten reaktive Hydroxylgruppen und eine Molekularmasse von 60 bis 150 Dalton aufweist, mit 5 bis 25 Gew.-% einer Polyisocyanat-Komponente (B) bestehend aus mindestens einem Polyisocyanat, Polyisocyanat-Derivat oder Polyisocyanat-Homologen mit mindestens zwei aliphatischen und/oder aromatischen Isocyanatgruppen ggf. in Gegenwart eines Katalysators zu einem Polyurethan-Preaddukt reagieren läßt, danach
**b**) das Polyurethan-Preaddukt aus Stufe a) mit 0,5 bis 5 Gew.-% einer niedermolekularen und anionisch modifizierbaren Polyol-Komponente (A) (iii), die mindestens zwei gegenüber Polyisocyanaten reaktive Hydroxylgruppen und mindestens eine gegenüber Polyisocyanaten inerte Carboxylgruppe, die in Gegenwart von Basen vollständig oder teilweise in Carboxylatgruppen überführt werden kann, aufweist, zum entsprechenden Prepolymer umsetzt,
**c**) das Prepolymer aus Stufe b) mit 0,25 bis 2,5 Gew.-% einer Neutralisations-Komponente (C) zur vollständigen oder teilweisen Neutralisation der Carboxylgruppen reagieren läßt, anschließend oder gleichzeitig
**d**) das neutralisierte Prepolymer aus Stufe c) in 10 bis 60 Gew.-% Wasser, das ggf. noch 10 bis 70 Gew.-% einer Formulierungs-Komponente (F) ausgewählt aus Füllstoffen, Pigmenten, Weichmachern, Fasermaterialien und/oder sonstigen üblichen Additiven enthält, dispergiert, im Anschluß daran
**e**) die Dispersion aus Stufe d) mit 0,25 bis 2,5 Gew.-% einer Kettenverlängerungs-Komponente (D) bestehend aus mindestens einem Polyamin, das mindestens zwei gegenüber Polyisocyanaten reaktive Aminogruppen aufweist, zur Umsetzung bringt, und
**f**) ggf. die Dispersion aus Stufe e) mit 0,05 bis 0,5 Gew.-% einer Kettenstopper-Komponente (E) ausgewählt aus mindestens einem Monoamin, das eine gegenüber Polyisocyanaten reaktive Aminogruppe aufweist, reagieren läßt.

Es hat sich nämlich überraschenderweise gezeigt, daß die erfindungsgemäße Polyurethan-Dispersion aufgrund ihres Herstellverfahrens vorzugsweise eine ideal linear segmentierte Struktur aufweist. Der Ausdruck "ideal linear segmentierte Struktur" kennzeichnet hierbei, daß das Polyurethan-Polymer einen linearen Aufbau besitzt und alle Aufbau-Komponenten in regelmäßiger Sequenz enthält, woraus die besonderen Eigenschaften der erfindungsgemäßen Polyurethan-Dispersion resultieren.

Die erfindungsgemäße Polyurethan-Dispersion ist definiert durch ihr mehrstufiges Herstellverfahren. Zur Durchführung dieses Verfahrens wird unter Anwendung der in-der-Polyurethanchemie üblichen Techniken in der Reaktionsstufe a) 10 bis 50 Gew.-% einer Polyol-Komponente (A) (i) sowie ggf. 0,5 bis 5 Gew.-% einer Polyol-Komponente (A) (ii) mit 5 bis 25 Gew.-% einer Polyisocyanat-Komponente (B) ggf. in Gegenwart eines Katalysators zu einem Polyurethan-Preaddukt umgesetzt, wobei sich die Gewichtsangaben jeweils auf die reinen Polyurethan-Dispersionen bzw. in situ formulierten Polyurethan-Dispersionen beziehen.

Die Komponente (A) (i) besteht aus mindestens einem höhermolekularen Polyol mit zwei oder mehreren gegenüber Polyisocyanaten reaktiven Hydroxylgruppen und einer mittleren Molekularmasse (Zahlenmittel Mₙ) von 500 bis 6 000 Dalton, und zwar insbesondere auf Basis eines Polyether- und/oder Polyester-Polyols. Dabei handelt es sich vorzugsweise um polymere Polyole wie Polyalkylenglykole, aliphatische und/oder aromatische Polyester, Polycaprolactone, Polycarbonate, Makromonomere, Telechele oder Epoxidharze oder Gemische daraus. Polyalkylenglykole sind z.B. aus Monomeren wie Ethylenoxid, Propylenoxid, Butylenoxid, Tetrahydrofuran durch Polymerisation in Gegenwart von Bortrifluorid oder durch Pofyaddition an Starterverbindungen mit reaktiven Wasserstoffatomen wie Wasser, Alkohole, Amine oder Bisphenol A erhältlich. Dabei können auch Gemische der Monomeren gleichzeitig oder nacheinander eingesetzt werden. Als geeignete Polyalkylenglykole können bspw. Polyethylenglykole, Polypropylenglykole (z.B. Voranol-Typen der Fa. Dow), gemischte Polyglykole auf Basis Ethylenoxid und Propylenoxid sowie Polytetramethylenglykole bzw. Polytetrahydrofurane (z.B. PolyTHF 2000 der Fa. BASF) verwendet werden. Als bevorzugt sind lineare bzw. difunktionelle Polypropylenglykole mit einer mittleren Molekularmasse (Zahlenmittel Mₙ) von 3 000 bis 4 000 Dalton anzusehen. Aliphatische und/oder aromatische Polyester-Polyole sind z.B. durch Polykondensations- und/oder Polyadditionsreaktionen aus zwei- oder mehrwertigen Alkoholen und zwei-oder mehrwertigen Carbonsäuren, Carbonsäureanhydriden oder Carbonsäureestern erhältlich. Als geeignete aliphatische oder aromatische Polyester können beispielsweise Kondensate auf Basis von 1,2-Ethandiol (Ethylenglykol), 1,4-Butandiol (1,4-Butylenglykol), 1,6-Hexandiol (1,6-Hexamethylenglykol) und 2,2-Dimethyl-1,3-propandiol (Neopentylglykol) sowie 1,6-Hexandisäure (Adipinsäure) und 1,3-Benzoldicarbonsäure (Isophthalsäure) (z.B. Bester-Typen der Fa. Poliolchimica) eingesetzt werden. Bevorzugt werden lineare bzw. difunktionelle aliphatische und/oder aromatische Polyester-Polyole mit einer mittleren Molekularmasse (Zahlenmittel Mₙ) von 1 000 bis 3 000 Dalton eingesetzt. Polycaprolactone (z.B. Capa-Typen der Fa. Solvay Interox) und Polycarbonate (z.B. Desmophen C 200 der Fa. Bayer) sind ebenfalls zur Gruppe der Polyester zugehörig. Erstere können durch Umsetzung von Phosgen bzw. aliphatischen oder aromatischen Carbonaten, wie bspw. Diphenylcarbonat oder Diethylcarbonat, mit zwei-oder mehrwertigen Alkoholen erhalten werden. Letztere können durch Polyaddition von Lactonen, wie bspw. ε-Caprolacton, an Starterverbindungen mit reaktiven Wasserstoffatomen wie Wasser, Alkohole, Amine oder Bisphenol A hergestellt werden. Denkbar sind auch synthetische Kombinationen von Polyestern, Polycaprolactonen und Polycarbonaten. Ebenfalls geeignet sind Makromonomere, Telechele oder Epoxidharze. Bei den Makromonomeren und Telechelen handelt es sich um Polyhydroxyolefine, wie bspw. α-ω-Dihydroxypolybutadiene, α-β-Dihydroxy(meth)acrylsäureester, α-ω-Dihydroxy(meth)acrylsäureester oder α-ω- Dihydroxypolysiloxane. Bei den Epoxidharzen handelt es sich vorzugsweise um Derivate des Bisphenol-A-diglycidethers (BADGE).

Die Komponente (A) (ii) besteht aus mindestens einem niedermolekularen Polyol mit zwei oder mehr gegenüber Polyisocyanaten reaktiven Hydroxylgruppen und einer Molekularmasse von 60 bis 150 Dalton. Als geeignete niedermolekulare Polyole können bspw. 1,2-Ethandiol (Ethylenglykol), 1,2-Propandiol (1,2-Propylenglykol), 1,3-Propandiol (1,3-Propylenglykol), 1,4-Butandiol (1,4-Butylenglykol), 1,6-Hexandiol (1,6-Hexamethylenglykol), 2-Methyl-1,3-propandiol (Handelsname MPDiol Glycol⁷ der Fa. Arco Chemical), 2,2-Dimethyl-1,3-propandiol (Neopentylglykol), 1,4-Bis-(hydroxymethyl)-cyclohexan(Cyclohexandimethanol),1,2,3-Propantriol (Glycerol), 2-Hydroxymethyl-2-methyl-1,3-propanol (Trimethylolethan), 2-Ethyl-2-hydroxymethyl-1,3-propandiol (Trimethylolpropan) und/oder 2,2-Bis-(hydroxymethyl)-1,3-propandiol (Pentaerythrit) eingesetzt werden.

Die Isocyanat-Komponente (B) besteht aus mindestens einem Polyisocyanat, Polyisocyanat-Derivat und/oder Polyisocyanat-Homologen mit zwei oder mehreren aliphatischen und/oder aromatischen Isocyanatgruppen. Geeignet sind insbesondere die in der Polyurethanchemie hinreichend bekannten Polyisocyanate oder Kombinationen daraus. Als geeignete aliphatische Polyisocyanate können bspw. 1,6-Diisocyanatohexan (HDI), 1-Isocyanato-5-isocyanatomethyl-3,3,5-trimethyl-cyclohexan (IPDI), Bis-(4-isocyanatocyclohexyl)-methan (H₁₂MDI), 1,3-Bis-(1-isocyanato-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanatoluol (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate eingesetzt werden. Weiterhin sind auch die sogenannten "Lackpolyisocyanate" beispielsweise auf Basis von Bis-(4-isocyanatocyclo-hexyl)-methan (H₁₂MDI), 1,6-Diisocyanatohexan (HDI), 1-lsocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion- und Urethangruppen aufweisende Derivate dieser Diisocyanate, bei denen der Restgehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind. Die aliphatischen Polyisocyanate sind gegenüber den aromatischen Polyisocyanaten zu bevorzugen. Weiterhin werden Polyisocyanate mit lsocyanatgruppen unterschiedlicher Reaktivität bevorzugt.

Die Durchführung der Reaktionsstufe a) ist im Hinblick auf die Reaktionsbedingungen relativ unkritisch. Vorzugsweise erfolgt die Bildung des Polyurethan-Preaddukts in der Weise, daß die Komponente (B) innerhalb eines Zeitraumes von einigen Minuten bis zu einigen Stunden dem Gemisch aus den Komponenten (A) (i) und ggf. (A) (ii) zugesetzt bzw. zudosiert wird oder alternativ dazu das Gemisch der Komponente (A) (i) und ggf. (A) (ii) innerhalb eines Zeitraumes von einigen Minuten bis zu einigen Stunden der Komponente (B) zugesetzt bzw. zudosiert wird.

Das bevorzugte NCO/OH-Equivalent-Verhältnis der Komponenten (B) (Polyisocyanate) und (A) (Polyole) wird auf einen Wert von 1,5 bis 2,5, insbesondere jedoch 1,8 bis 2,2, eingestellt. Der Reaktionsansatz wird unter Ausnutzung der Exothermie der Polyadditionsreaktion bis zum Erreichen des berechneten bzw. theoretischen NCO-Gehaltes bei 60 bis 120°C, bevorzugt jedoch bei 80 bis 100°C, unter einer Inertgasatmosphäre gerührt. Die erforderlichen Reaktionszeiten liegen üblicherweise im Bereich von einigen Stunden und werden durch Reaktionsparameter wie die Reaktivität der jeweils verwendeten Komponenten und deren Stöchiometrie sowie die Temperatur beeinflußt.

Die Umsetzung der Komponenten (A) und (B) in der Reaktionsstufe a) kann in Gegenwart eines für Polyadditionsreaktionen an Polyisocyanaten üblichen Katalysatorsystems erfolgen. Bei Bedarf erfolgt ein Zusatz dieser Katalysatoren in ausreichenden Mengen von z.B. 0,01 bis 1 Gew.-% bezogen auf die Komponenten (A) und (B). Gebräuchliche Katalysatoren für Polyadditionsreaktionen an Polyisocyanaten sind bspw. Dibutylzinnoxid, Dibutylzinndilaurat (DBTL), Triethylamin, Zinn(II)-octoat, 1,4-Diazabicyclo[2,2,2]octan (DABCO), 1,4-Diaza-bicyclo[3,2,0]-5-nonen (DBN), 1,5-Diaza-bicyclo[5,4,0]-7-undecen (DBU).

In der nachfolgenden Reaktionsstufe b) erfolgt die Umsetzung des Polyurethan-Preaddukts aus Stufe a) mit der Komponente (A) (iii) zum entsprechenden Prepolymer, wobei die Komponente A (iii) in einem Anteil von 0,5 bis 5 Gew.-% eingesetzt wird. Die Polyol-Komponente (A) (iii) wird dabei vorzugsweise als feingemahlenes Pulver mit einer Teilchengröße < 150 µm innerhalb eines Zeitraumes von einigen Minuten bis zu einigen Stunden dem Polyurethan-Preaddukt aus Stufe a) zugesetzt bzw. zudosiert.

Die Komponente (A) (iii) besteht aus mindestens einem niedermolekularen und anionisch modifizierbaren Polyol mit mindestens zwei gegenüber Polyisocyanaten reaktiven Hydroxylgruppen und mindestens einer gegenüber Polyisocyanaten inerten Carboxylgruppe, die in Gegenwart von Basen ganz oder teilweise in Carboxylatgruppen überführt werden kann. Als niedermolekulare und anionisch modifizierbare Polyole können beispielsweise 2-Hydroxymethyl-3-hydroxypropansäure (Dimethylolessigsäure), 2-Hydroxymethyl-2-methyl-3-hydroxypropansäure(Dimethylolpropionsäure), 2-Hydroxymethyl-2-ethyl-3-hydroxypropansäure (Dimethylolbuttersäure), 2-Hydroxymethyl-2-propyl-3-hydroxypropansäure (Dimethylolvaleriansäure), Citronensäure und/oder Weinsäure eingesetzt werden. Bevorzugt werden Bishydroxyalkan-carbonsäuren eingesetzt und besonders bevorzugt 2-Hydroxymethyl-2-methyl-3-hydroxypropansäure (Handelsname DMPA® der Fa. Mallinckrodt). Weiterhin bevorzugt weist die Komponente A (iii) eine Molekularmasse von 100 bis 200 Dalton auf.

Polyadditionsreaktionen zur Herstellung derartiger Polyurethan-Prepolymere erfordern hohe NCO/OH-Equivalent-Verhältnisse, d.h. Verhältnisse der Komponente (B) zu den Komponenten (A) von insbesondere 1,5 bis 2,5, vorzugsweise 1,8 bis 2,2. Zudem werden vorzugsweise Polyisocyanate, die Isocyanat-Gruppen unterschiedlicher Reaktivität enthalten, eingesetzt, um engere Molekularmassenverteilungen mit geringerer Uneinheitlichkeit zu erhalten. Dementsprechend werden Polyurethan-Prepolymere mit linearer Struktur bevorzugt, die sich aus difunktionellen Polyol- und Polyisocyanat-Komponenten zusammensetzen.

Die Herstellung der Prepolymere entsprechend Reaktionsstufe b) erfolgt vorzugsweise bei Temperaturen von 60 bis 120°C, insbesondere bei 80 bis 100°C.

Die Viskosität der Polyurethan-Prepolymere ist relativ niedrig und weitgehend unabhängig von der Struktur der verwendeten Polyol- und Polyisocyanat-Komponenten. Ein Zusatz von Lösemitteln zur Viskositätsverminderung oder zur Verbesserung der Dispergiereigenschaften der Polyurethan-Prepolymere ist daher nicht erforderlich. Die besondere Struktur der Prepolymere ermöglicht die Herstellung von Produkten mit außerordentlich hohen Feststoffgehalten. Außerdem werden aufgrund der gleichmäßigen Verteilung der Carboxyl- bzw. Carboxylatgruppen über das Polyurethan-Polymer nur geringe Ladungsdichten für die Stabilisierung der entsprechenden Polyurethan-Dispersionen benötigt.

Das Polyurethan-Prepolymer aus Stufe b) wird in der nachfolgenden Reaktions-Stufe c) mit 0,25 bis 2,5 Gew.-% einer Neutralisations-Komponente (C) zur vollständigen oder teilweisen Neutralisation der Carboxylgruppen (-COOH) umgesetzt (direkte Neutralisation). Die Neutralisations-Komponente (C) ist vorzugsweise in einer solchen Menge vorhanden, daß der Neutralisations-Grad bezogen auf die freien Carboxylgruppen des Polyurethan-Prepolymers bei 70 bis 100 Equivalent-%, vorzugsweise bei 80 bis 90 Equivalent-%, liegt. Bei der Neutralisation werden aus den Carboxylgruppen Carboxylatgruppen (-COO⁻) gebildet, die zur anionischen Modifizierung bzw. Stabilisierung der Polyurethan-Dispersion dienen. Die Reaktionsstufe c) wird bei einer Temperatur von 40 bis 60°C, vorzugsweise bei ca. 50°C durchgeführt. Alternativ dazu kann die Neutralisations-Komponente (C) auch in Stufe d) im Dispergiermedium vorgelegt werden.

Die Neutralisations-Komponente (C) besteht aus einer oder mehreren Basen, die zur vollständigen oder teilweisen Neutralisation von Carboxyl-gruppen geeignet sind. Als geeignete Basen können tertiäre Amine wie N,N-Dimethylethanolamin, N-Methyl-diethanolamin, Triethanolamin, N,N-Dimethylisopropanolamin, N-Methyl-diisopropanolamin, Triisopropylamin, N-Methyl-morpholin, N-Ethyl-morpholin, Triethylamin, Ammoniak oder Alkalihydroxide wie Lithiumhydroxid, Natriumhydroxid, Kaliumhydroxid eingesetzt werden. Bevorzugt werden tertiäre Amine und insbesondere Triethylamin eingesetzt.

Das neutralisierte Polyurethan-Prepolymer aus Stufe c) wird in der nachfolgenden Reaktionsstufe d) in 10 bis 60 Gew.-% Wasser, das ggf. noch 10 bis 70 Gew.-% einer Formulierungs-Komponente (F) ausgewählt aus Füllstoffen, Pigmenten, Weichmachern, Fasermaterialien, Dispergierhilfsmitteln, Rheologiehilfsmitteln, Entschäumern, Haftvermittlern, Frostschutzmitteln, Flammschutzmitteln, Bakteriziden, Fungiziden, Konservierungsmitteln und/oder weiteren Polymeren bzw. Polymer-Dispersionen enthält, dispergiert.

Bei der Dispergierung wird das neutralisierte Polyurethan-Prepolymer in das Dispergiermedium überführt, wobei eine Polyurethan-Prepolymer-Dispersion entsteht. Das neutralisierte Polyurethan-Prepolymer bildet dabei überwiegend Micellen, die an der Oberfläche stabilisierende Carboxylatgruppen und im Inneren reaktive lsocyanatgruppen aufweisen. Alle kationischen Gegenionen zu den anionischen Carboxylatgruppen sind im Dispergiermedium gelöst. Die Begriffe "Dispergierung" bzw. "Dispersion" beinhalten, daß neben dispergierten Komponenten mit micellarer Struktur auch solvatisierte und/oder suspendierte Komponenten enthalten sein können. Für die Überführung des Polyurethan-Prepolymers in die wäßrige Phase kann entweder das Polyurethan-Prepolymer in das Dispergiermedium oder das Dispergiermedium in das Polyurethan-Prepolymer eingerührt werden. Die Reaktionsstufe d) wird bei einer Temperatur von 30 bis 50°C, vorzugsweise bei ca. 40°C, durchgeführt.

Zu der beschriebenen Vorgehensweise existieren noch weitere Alternativen. Die Stufen c) und d) können in der Weise zusammengefaßt werden, daß die Neutralisations-Komponente (C) dem Wasser zugesetzt wird, in dem das nicht neutralisierte Polyurethan-Prepolymer entsprechend Reaktionstufe d) dispergiert wird (indirekte Neutralisation). Die Formulierungs-Komponente (F) kann vor der Dispergierung gemäß Reaktionsstufe d) ganz oder teilweise in das Polyurethan-Prepolymer eingerührt werden, falls das Herstellungsverfahren dadurch nicht beeinträchtigt wird.

Die Polyurethan-Prepolymer-Dispersion aus Stufe d) wird in der anschließenden Reaktionsstufe e) mit 0,25 bis 2,5 Gew.-% einer Kettenverlängerungs-Komponente (D) und ggf. in der Reaktionsstufe f) mit 0,05 bis 0,5 Gew.-% einer Kettenstopper-Komponente (E) umgesetzt.

Die Kettenverlängerungs-Komponente (D) besteht aus mindestens einem Polyamin mit zwei oder mehreren gegenüber Polyisocyanaten reaktiven Aminogruppen. Geeignete Polyamine sind beispielsweise Adipinsäuredihydrazid, Ethylendiamin, Diethylentriamin, Triethylentetramin, Tetraethylenpentamin, Pentaethylenhexamin, Dipropylentriamin, Hexamethylendiamin, Hydrazin, Isophorondiamin, N-(2-Aminoethyl)-2-aminoethanol, Addukte aus Salzen der 2-Acrylamido-2-methylpropan-1-sulfonsäure (AMPS) und Ethylendiamin oder beliebige Kombination dieser Polyamine. Bevorzugt werden difunktionelle primäre Amine und insbesondere 1,2-Diaminoethan (Ethylendiamin) eingesetzt.

Die Kettenstopper-Komponente (E) besteht aus mindestens einem Monoamin mit einer gegenüber Polyisocyanaten reaktiven Aminogruppe. Geeignete Monoamine sind beispielsweise Ethylamin, Diethylamin, n-Propylamin, Di-n-propylamin, Isopropylamin, Diisopropylamin, n-Butylamin, Di-n-butylamin, Ethanolamin, Diethanolamin, Isopropanolamin, Diisopropanolamin, Morpholin, Piperidin, Pyrrolidin oder beliebige Kombination dieser Polyamine. Bevorzugt werden monofunktionelle primäre Amine und insbesondere 2-Aminopropan (Isopropylamin) eingesetzt.

Die Kettenverlängerungs-Komponente (D) wird gemäß einer bevorzugten Ausführungsform in einer solchen Menge eingesetzt, daß der Kettenverlängerungsgrad bezogen auf die freien Isocyanatgruppen des Polyurethan-Prepolymers bei 50 bis 100 Equivalent-%, vorzugsweise bei 70 bis 80 Equivalent-%, liegt. Die Kettenstopper-Komponente (E) wird ggf. in einer solchen Menge eingesetzt, daß der Kettenstoppungsgrad bezogen auf die freien Isocyanatgruppen des Polyurethan-Prepolymers bei 1 bis 20 Equivalent-%, vorzugsweise bei 5 bis 10 Equivalent-%, liegt. Bei Verwendung der Kettenverlängerungs-Komponente (D) und der Kettenstopper-Komponente (E) können die Komponenten entweder nacheinander oder gleichzeitig bzw. als Gemisch der Polyurethan-Prepolymer-Dispersion aus Stufe d) zugesetzt werden. Die Kettenverlängerung der Polyurethan-Prepolymer-Dispersion führt zum Aufbau der Molekularmasse der Polyurethan-Polyharnstoff-Moleküle innerhalb der Micellen und somit zur Erhöhung der durchschnittlichen Molekularmasse in der Polyurethan-Polyharnstoff-Dispersion. Die Kettenvertängerungs-Komponente (D) reagiert dabei mit reaktiven lsocyanatgruppen wesentlich rascher als Wasser. Die Kettenstoppung der Polyurethan-Prepolymer-Dispersion führt zum Abbruch des Aufbaus der Molekularmasse und somit zur Verringerung der durchschnittlichen Molekularmasse. Die Kettenstopper-Komponente (E) reagiert dabei mit reaktiven Isocyanatgruppen wesentlich rascher als Wasser. Durch Variation der Menge der Kettenstopper-Komponente und/oder des Zeitpunkts der Zugabe zur Dispersion kann eine Regulierung der durchschnittlichen Molekularmasse erfolgen. Im Anschluß an die Reaktions-Stufen e) und f) können evtl. noch vorhandene freie lsocyanatgruppen mit Wasser vollständig kettenverlängert werden.

Der Feststoffgehalt an Polyurethan-Polymer wird insbesondere auf 40 bis 70 Gew.-%, vorzugsweise auf 50 bis 60 Gew.-%, bezogen auf die Gesamtmenge der reinen Polyurethan-Dispersion (Polyurethan-Polymer plus Wasser) eingestellt. Der Feststoffgehalt an Polyurethan-Polymer beträgt vorzugsweise 10 bis 50 Gew.-%, insbesondere 20 bis 40 Gew.-%, und der Feststoffgehaft an Füllstoffen 10 bis 70 Gew.-%, insbesondere 20 bis 60 Gew.-%, bezogen auf die Gesamtmenge der in situ formulierten Polyurethan-Dispersion (Polyurethan-Polymer plus Formulierungs-Komponente(n) plus Wasser).

Der Gehalt an Carboxylatgruppen im Polyurethan-Polymer wird vorzugsweise auf 10 bis 50 meq^{.}(100 g)⁻¹, insbesondere auf 15 bis 35 meq^{.}(100 g)⁻¹, eingestellt.

Die mittlere Partikelgröße der Micellen des Polyurethan-Polymers beträgt vorzugsweise 100 bis 500 nm, insbesondere 200 bis 400 nm. Die entsprechenden Angaben beziehen sich auf Messungen mit Hilfe der Photonenkorrelationsspektroskopie (PCS).

Das Polyurethan-Polymer weist in der Regel eine mittlere Molekularmasse von 25 000 bis 100 000 Dalton auf. Die entsprechenden Angaben beziehen sich auf das Zahlenmittel Mₙ und Messungen mit Hilfe der Gelpermeationschromatographie (GPC).

Das erfindungsgemäß verwendete Verfahren, das im folgenden auch als High Solids Zero VOC Process bezeichnet wird, stellt eine universelle Methode zur Herstellung von maßgeschneiderten Polyurethan-Dispersionen dar. Die geringen technischen Anforderungen des Verfahrens und der völlige Verzicht auf flüchtige und/oder nichtflüchtige organische Lösemittel ermöglichen hohe Raum/Zeit-Ausbeuten bei niedrigen Kosten. Das Verfahren kombiniert die Vorteile von Prepolymer Mixing Process und Solvent Process. Hervorzuheben sind außerdem die Reproduzierbarkeit des Verfahrens und die Lagerstabilität der Produkte. Für eine Herstellung im technischen Maßstab wird nur eine einfache Polymerisationsapparatur bestehend aus einem Rührkessel und einem Dissolver benötigt. Diese Konfiguration entspricht dem Prepolymer Mixing Process.

Die Performance der erfindungsgemäßen Polyurethan-Dispersionen hinsichtlich Lösemittelfreiheit, Feststoffgehalt und Materialeigenschaften erreicht dagegen den Standard von Produkten auf Basis des Solvent Process.

Bei den in situ formulierten Polyurethan-Dispersionen werden außerordentlich hohe Feststoffgehalte bei vergleichsweise niedrigen Viskositäten von vorzugsweise 10 bis 800 mPas erzielt, was bei einer konventionellen Formulierung der reinen Polyurethan-Dispersionen nicht möglich wäre. Zudem erfordert eine konventionelle Formulierung häufig eine vorhergehende Befeuchtung der Füllstoff-Komponente, um einer Destabilisierung der Polyurethan-Dispersion durch adsorptive Effekte vorzubeugen. Dadurch wird die Formulierungsprozedur komplizierter und der Wassergehalt der Formulierung moglicherweise weiter erhöht. Mit Hilfe des erfindungsgemäß vorgeschlagenen Verfahrens kann diese Problematik auf elegante Art und Weise umgangen werden. Die Formulierung der Polyurethan-Dispersion wird dabei vollständig in das Syntheseverfahren des High Solids Zero VOC Process integriert.

Ein weiterer Gegenstand der Erfindung ist somit ein Verfahren zur Herstellung der erfindungsgemäßen lösemittelfreien Polyurethan-Dispersionen.

Die erfindungsgemäßen Polyurethan-Dispersionen können im Baubereich als einkomponentige, isocyanatfreie und lösemittelfreie Bindemittel bzw. Fertigprodukte eingesetzt werden. Bei diesen bauchemischen Anwendungen handelt es sich um Beschichtungen, Dichtstoffe, Klebstoffe, Lacke oder Membranen für die Oberflächen von mineralischen Baustoffen wie Beton, Gips, Zement, sowie Glas, Holz, Papier, Metall oder Kunststoff. Die Applikation der erfindungsgemäßen Polyurethan-Dispersionen erfolgt mit den aus der Lacktechnologie bekannten Methoden, wie z.B. Fluten, Gießen, Rakeln, Spritzen, Streichen, Tauchen, Walzen.

Die Materialeigenschaften der aus den Polyurethan-Dispersionen hergestellten Polyurethan-Filme sind exzellent. Bedingt durch die ideal linear segmentierte Struktur der Polyurethan-Polymeren resultiert intermolekular eine sehr ausgeprägte und regelmäßige Domänenstruktur aus Hartsegmenten und Weichsegmenten. Hartsegmente bestehen aus Strukturelementen mit starren Urethan- und Harnstoffgruppen, die eine starke interchenare Wechselwirkung ausüben. Weichsegmente bestehen aus flexiblen Strukturelementen mit Carbonat-, Ester- und Ethergruppen, die eine schwache interchenare Wechselwirkung ausüben.

Die erfindungsgemäßen Polyurethan-Dispersionen zeichnen sich durch außerordentlich hohe Feststoffgehalte bei vergleichsweise niedrigen Viskositäten, vollständige Lösemittelfreiheit, ausgezeichnete Material-Eigenschaften (wie z. B. Elastizität, Dehnung sowie Zugfestigkeit) und ein technisch einfaches Herstellungsverfahren aus.

Die nachfolgenden Beispiele sollen die Erfindung näher veranschaulichen.

### Beispiel 1

### Lösemittelfreie Polyurethan-Dispersion mit hohem Feststoff-Gehalt auf Basis eines Polypropylenglykols der Molekularmasse 3 000 Dalton

In einem Vierhalskolben ausgerüstet mit KPG-Rührer, Rückflußkühler, Thermometer und Stickstoff-Deckung wurde ein Gemisch aus 300,00 g eines Polypropylenglykols mit einer Hydroxylzahl von 37,4 mg KOH·g⁻¹ (Handelsname Voranol P3000 der Fa. Dow) und 80,25 g Isophorondiisocyanat (Handelsname Vestanat IPDI der Fa. Hüls) unter Stickstoff-Deckung 2 h bei 80 bis 90°C gerührt. Nach Zugabe von 10,80 g fein gemahlener Dimethylolpropionsäure (Handelsname DMPA der Fa. Mallinckrodt) zu dem Preaddukt wurde die Mischung unter Stickstoff-Deckung bei 80 bis 90°C weiter gerührt, bis der berechnete NCO-Gehalt erreicht wurde (NCO/OH = 2,00). Der Verlauf der Reaktion wurde acidimetrisch verfolgt. Nach Abschluß der Polyadditionsreaktion wurde ein NCO-Gehalt von 3,91 Gew.-% (Theorie: 3,88 Gew.-%) gefunden.
Nach dem Abkühlen auf 50°C wurde das Prepolymer mit 90 Equivalent-% an Triethylamin direkt neutralisiert.

### Variante A

130,00 g des Prepolymers wurden dann unter intensivem Rühren in 108,68 g demineralisiertem Wasser dispergiert und anschließend zum Aufbau der Polyurethan-Dispersion mit 80 Equivalent-% an Ethylendiamin kettenverlängert.
Es wurde eine stabile Polyurethan-Dispersion mit folgender Charakteristik erhalten:

| Aussehen | mitchig-weiße Flüssigkeit |
|---|---|
| Feststoffgehalt | ca. 60 Gew.-% |
| pH | 7,47 |
| Viskosität - Brookfield | 254 mPa·s (20°C) |
| Mittlere Partikelgröße | 345 nm |

### Variante B

130,00 g des Prepolymers wurden dann unter intensivem Rühren in 108,82 g demineralisiertem Wasser dispergiert und anschließend zum Aufbau der Polyurethan-Dispersion mit 75 Equivalent-% an Ethylendiamin kettenverlängert und mit 5 Equivalent-% Isopropylamin kettengestoppt.

Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,4 |
| Viskosität - Brookfield | 50 mPa·s (20°C) |
| Mittlere Partikelgröße | 216 nm |

### Variante C

130,00 g des Prepolymers wurden dann unter intensivem Rühren in 109,02 g demineralisiertem Wasser dispergiert und anschließend zum Aufbau der Polyurethan-Dispersion mit 70 Equivalent-% an Ethylendiamin kettenverlängert und mit 10 Equivalent-% Isopropylamin kettengestoppt. Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,6 |
| Viskosität - Brookfield | 700 mPa·s (20°C) |
| Mittlere Partikelgröße | 261 nm |

### Beispiel 2

### Lösemittelfreie Polyurethan-Dispersion mit hohem Feststoffgehalt auf Basis von Polypropylenglykolen der Molekularmassen 3000 und 4000 Dalton

In einem Vierhalskolben ausgerüstet mit KPG-Rührer, Rückflußkühler, Thermometer und Stickstoff-Deckung wurde ein Gemisch aus 180,00 g eines Polypropylenglykols mit einer Hydroxylzahl von 37,4 mg KOH·g⁻¹ (Handelsname Voranol P3000 der Fa. Dow), 20,00 g eines Polypropylenglykols mit einer Hydroxyl-Zahl von 28,05 mg KOH·g⁻¹ (Handelsname Voranol P4000 der Fa. Dow) und 52,76 g Isophorondiisocyanat (Handelsname Vestanat IPDI der Fa. Hüls) unter Stickstoff-Deckung 2 h bei 80 - 90°C gerührt.

Nach Zugabe von 7,20 g fein gemahlener Dimethylolpropionsäure (Handelsname DMPA der Fa. Mallinckrodt) zu dem Preaddukt wurde die Mischung unter Stickstoff-Deckung bei 80 - 90°C weiter gerührt, bis der berechnete NCO-Gehalt erreicht wurde (NCO/OH = 2,00). Der Verlauf der Reaktion wurde acidimetrisch verfolgt. Nach Abschluß der Polyadditionsreaktion wurde ein NCO-Gehalt von 3,89 Gew.-% (Theorie: 3,84 Gew.-%) gefunden.

### Variante A

Nach dem Abkühlen auf 50°C wurden 129,98 g des Prepolymers mit 90 Equivalent-% an Triethylamin direkt neutralisiert.
130,00 g des Prepolymers wurden dann unter intensivem Rühren in 108,66 g demineralisiertem Wasser dispergiert und anschließend zum Aufbau der Polyurethan-Dispersion mit 80 Equivalent-% an Ethylendiamin kettenverlängert.
Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,3 |
| Viskosität - Brookfield | 360 mPa·s (20°C) |
| Mittlere Partikelgröße | 329 nm |

### Variante B

Nach dem Abkühlen auf 50°C wurden 129,98 g des Prepolymers mit 80 Equivalent-% an Triethylamin direkt neutralisiert.
130,00 g des Prepolymers wurden dann unter intensivem Rühren in 108,66 g demineralisiertem Wasser dispergiert und anschließend zum Aufbau der Polyurethan-Dispersion mit 80 Equivalent-% an Ethylendiamin kettenverlängert.
Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,3 |
| Viskosität - Brookfield | 180 mPa·s (20°C) |
| Mittlere Partikelgröße | 446 nm |

### Beispiel 3

### Lösemittelfreie Polyurethan-Dispersion mit hohem Feststoffgehalt auf Basis von Polypropylenglykol der Molekularmasse 2000

In einem Vierhalskolben ausgerüstet mit KPG-Rührer, Rückflußkühler, Thermometer und Stickstoff-Deckung wurde ein Gemisch aus 100,00 g eines Polypropytenglykols mit einer Hydroxylzahl von 56,1 mg KOH·g⁻¹ (Handelsname Voranol P2000 der Fa. Dow) und 35,49 g Isophorondiisocyanat (Handelsname Vestanat IPDI der Fa. Hüls) unter Stickstoff-Deckung 2 h bei 80 - 90°C gerührt.

Nach Zugabe von 4,00 g fein gemahlener Dimethylolpropionsäure (Handelsname DMPA der Fa. Mallinckrodt) zu dem Preaddukt wurde die Mischung unter Stickstoff-Deckung bei 80 - 90°C weiter gerührt, bis der berechnete NCO-Gehalt erreicht wurde (NCO/OH = 2,00). Der Verlauf der Reaktion wurde acidimetrisch verfolgt. Nach Abschluß der Polyadditionsreaktion wurde ein NCO-Gehalt von 4,86 Gew.-% (Theorie: 4,81 Gew.-%) gefunden.

Nach dem Abkühlen auf 50°C wurde das Prepolymer mit 90 Equivalent-% an Triethylamin direkt neutralisiert. 140,00 g des Prepolymers wurden dann unter intensivem Rühren in 95,85 g demineralisiertem Wasser dispergiert und anschließend zum Aufbau der Polyurethan-Dispersion mit 80 Equivalent-% an Ethylendiamin kettenverlängert. Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,41 |
| Viskosität - Brookfield | 75 mPa.s (20°C) |
| Mittlere Partikelgröße | 309 nm |

### Beispiel 4

### Lösemittelfreie Polyurethan-Dispersion mit hohem Feststoffgehalt auf Basis von Polypropylenglykol der Molekularmasse 1000

In einem Vierhalskolben ausgerüstet mit KPG-Rührer, Rückftußkühler, Thermometer und Stickstoff-Deckung wurde ein Gemisch aus 100,00 g eines Polypropylenglykols mit einer Hydroxylzahl von 112,2 mg KOH·g⁻¹ (Handelsname Voranol P1000 der Fa. Dow) und 59,39 g Isophorondiisocyanat (Handelsname Vestanat IPDI der Fa. Hüls) unter Stickstoff-Deckung 2 h bei 80 - 90°C gerührt. Nach Zugabe von 4,50 g fein gemahlener Dimethylolpropionsäure (Handelsname DMPA der Fa. Mallinckrodt) zu dem Preaddukt wurde die Mischung unter Stickstoff-Deckung bei 80 - 90°C weiter gerührt, bis der berechnete NCO-Gehalt erreicht wurde (NCO/OH = 2,00). Der Verlauf der Reaktion wurde acidimetrisch verfolgt. Nach Abschluß der Polyadditionsreaktion wurde ein NCO-Gehalt von 6,88 Gew.-% (Theorie: 6,85 Gew.-%) gefunden.

Nach dem Abkühlen auf 50°C wurde das Prepolymer mit 90 Equivalent-% an Triethylamin direkt neutralisiert. 160,00 g des Prepolymers wurden dann unter intensivem Rühren in 110,77 g demineralisiertem Wasser dispergiert und anschließend zum Aufbau der Polyurethan-Dispersion mit 80 Equivalent-% an Ethvlendiamin kettenverlängert.

Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 6,90 |
| Viskosität - Brookfield | 40 mPa·s (20°C) |
| Mittlere Partikelgröße | 339 nm |

### Beispiel 5

### Lösemittelfreie Polyurethan-Dispersion mit hohem Feststoffgehalt auf Basis eines Polytetrahydrofurans der Molekularmasse 2 000 Dalton

In einem Vierhalskolben ausgerüstet mit KPG-Rührer, Rückflußkühler, Thermometer und Stickstoff-Deckung wurde ein Gemisch aus 100,00 g eines aliphatischen Polytetrahydrofurans mit einer Hydroxylzahl von 56,1 mg KOH·g⁻¹ (Handelsname PolyTHF 2000 der Fa. BASF) und 38,81 g Isophorondiisocyanat (Handelsname Vestanat IPDI der Fa. Hüls) unter Stickstoff-Deckung 2 h bei 80 - 90°C gerührt. Nach Zugabe von 5,00 g fein gemahlener Dimethylolpropionsäure (Handelsname DMPA der Fa. Mallinckrodt) zu dem Preaddukt wurde die Mischung unter Stickstoff-Deckung bei 80 - 90°C weiter gerührt, bis der berechnete NCO-Gehalt erreicht wurde (NCO/OH = 2,00). Der Verlauf der Reaktion wurde acidimetrisch verfolgt. Nach Abschluß der Polyadditionsreaktion wurde ein NCO-Gehalt von 5,15 Gew.-% (Theorie: 5,10 Gew.-%) gefunden. Nach dem Abkühlen auf 50°C wurde das Prepolymer mit 90 Equivalent-% an Triethylamin direkt neutralisiert. 145,00 g des Prepolymers wurden dann unter intensivem Rühren in 99,38 g demineralisiertem Wasser dispergiert und anschließend zum Aufbau der Polyurethan-Dispersion mit 80 Equivalent-% an Ethylendiamin kettenverlängert. Es wurde eine stabile Polyurethan-Dispersion mit folgender Charakteristik erhalten:

| Aussehen | milchig-weiße Flüssigkeit |
|---|---|
| Feststoffgehalt | ca. 60 Gew.-% |
| pH | 7,4 |
| Viskosität - Brookfield | 12 mPa·s (20°C) |
| Mittlere Partikelgröße | 314 nm |

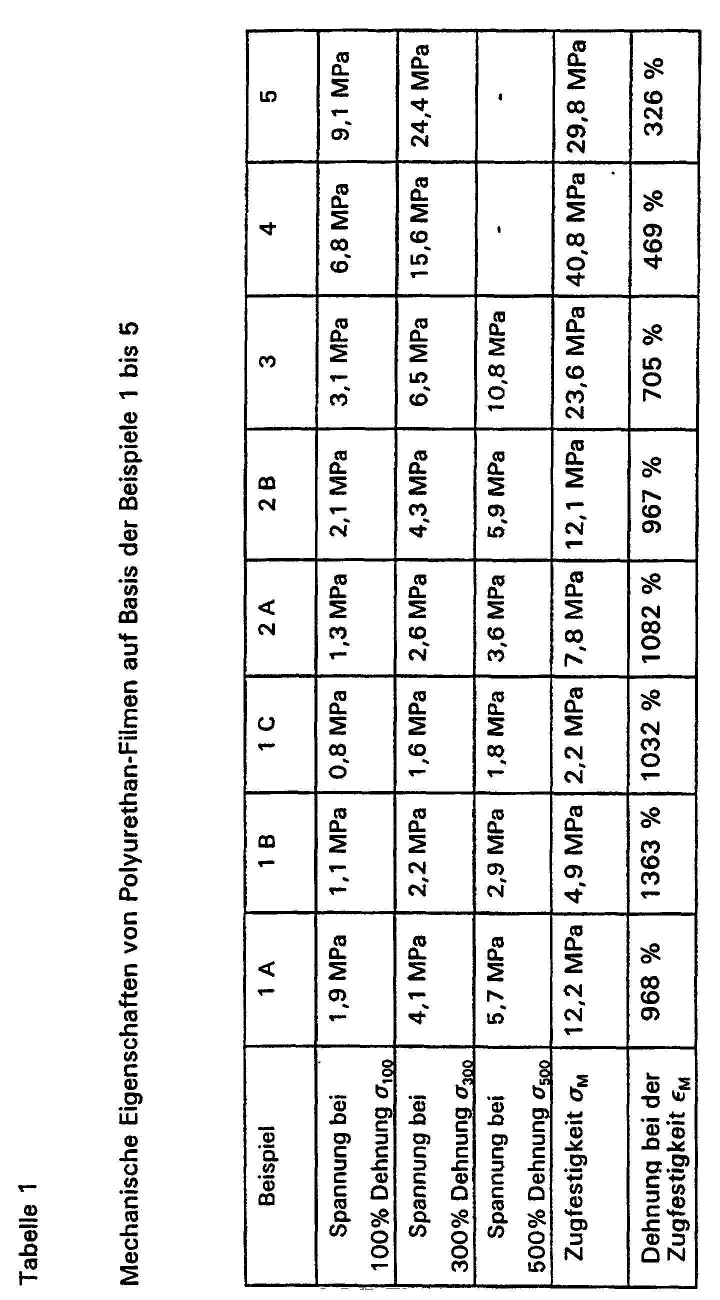

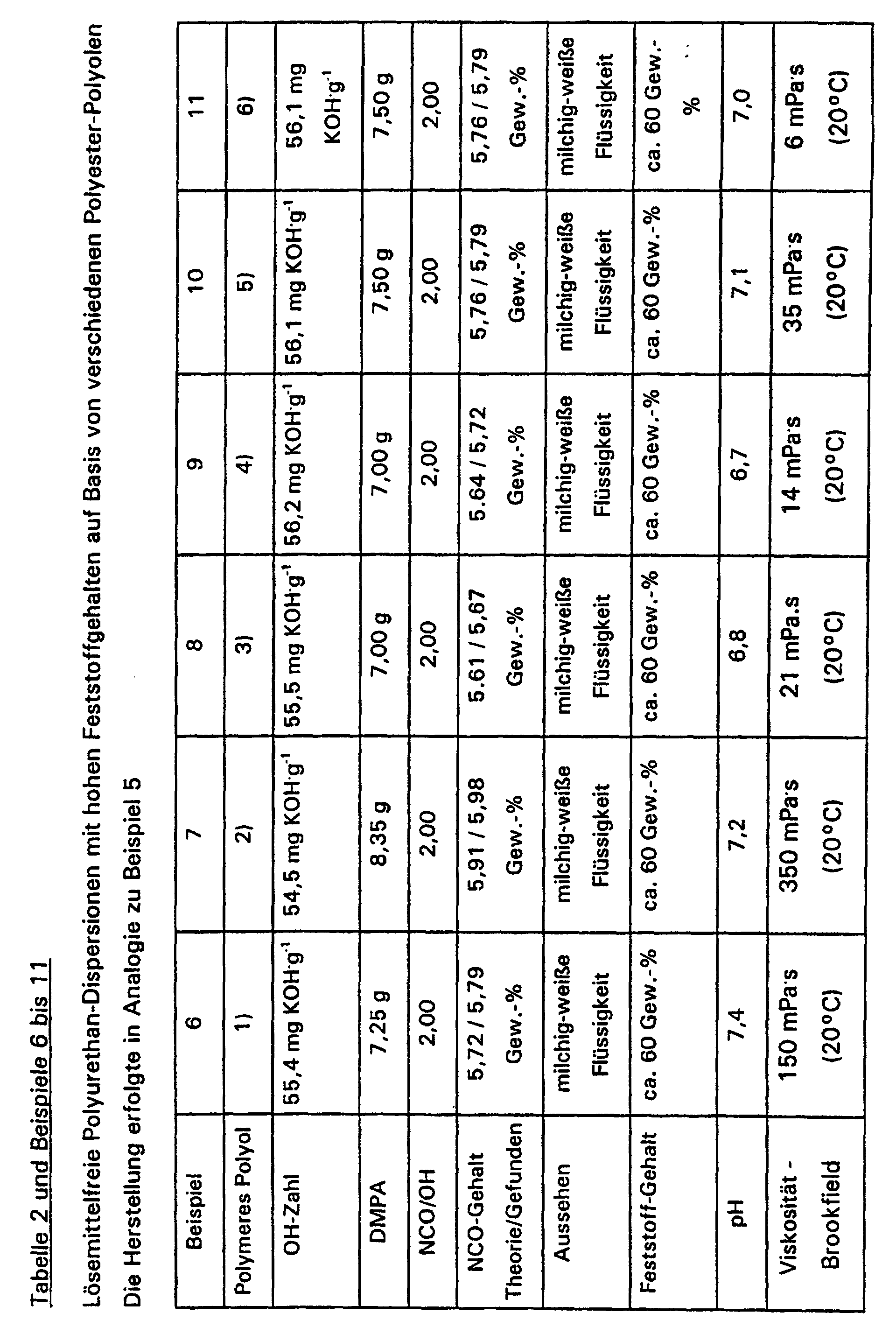

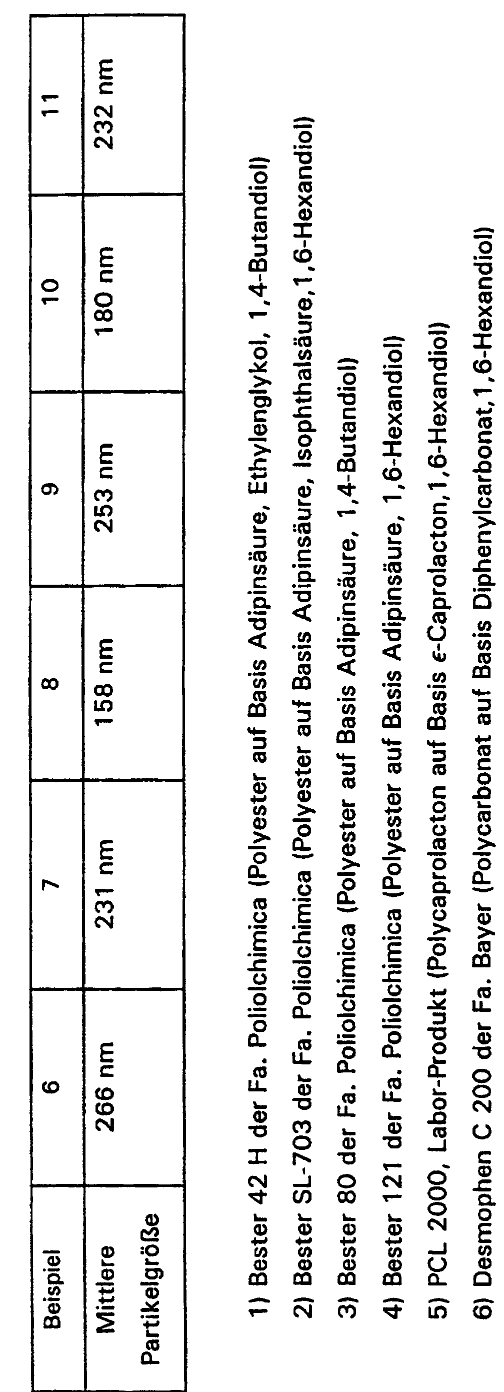

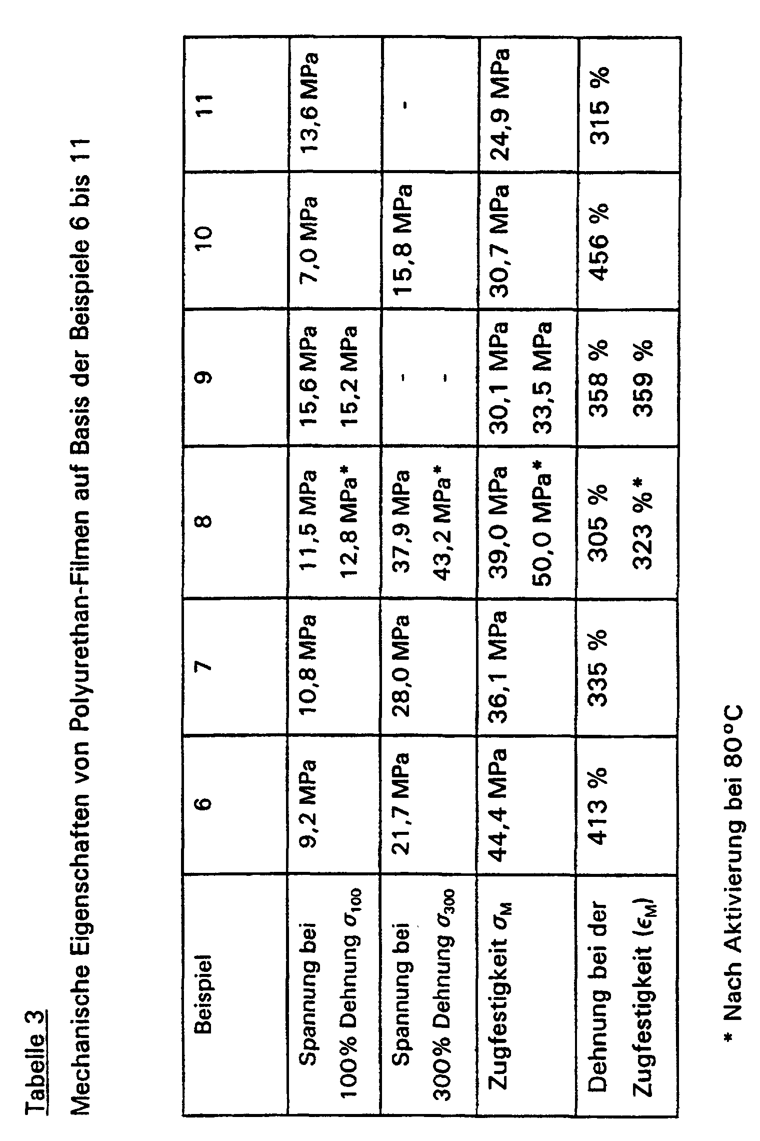

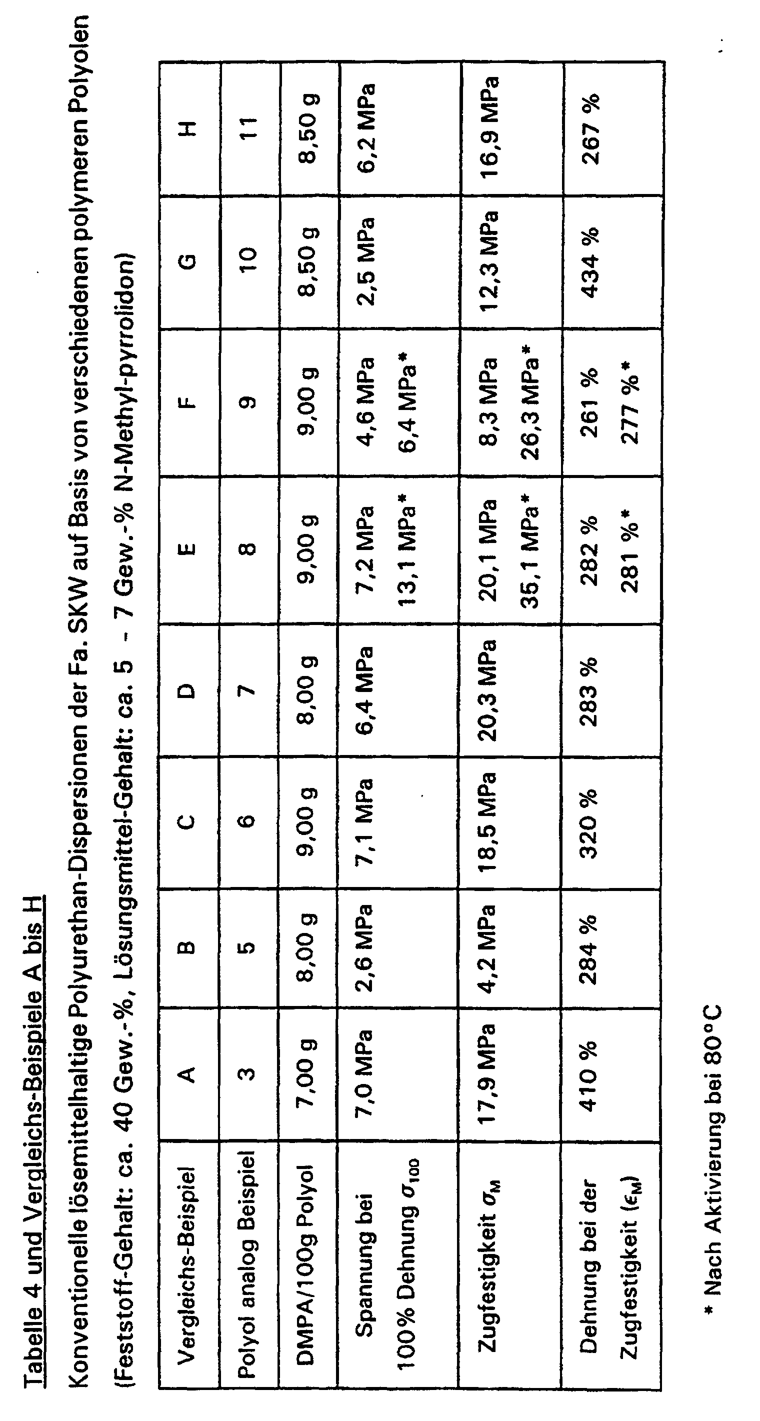

### Beispiel 12

### Lösemittelfreie und in situ formulierte Polyurethan-Dispersionen mit hohem Feststoffgehalt auf Basis eines Polypropylenglykols der Molekularmasse 3 000 Dalton

Die Synthese des Prepolymers erfolgte in Analogie zu Beispiel 1

### Variante A

100,00 g des Prepolymers wurden dann unter intensivem Rühren in einem vorab hergestellten Gemisch aus 70,00 g demineralisiertem Wasser, 120,00 g Durcal 10 (Fa. Omya), 80,00 g Barytmehl N (Fa. Sachtleben Chemie), 0,25 g Narlex LD 36 V (Fa. National Starch) dispergiert und anschließend zum Aufbau der Polyurethan-Dispersion mit 80 Equivalent-% an Ethylendiamin kettenverlängert.

### Varianten B, C und D

Die Herstellung erfolgte in Analogie zu Variante A, jedoch mit 80,00 g (Variante B), 90,00 g (Variante C) bzw. 100,00 g (Variante D) an demineralisiertem Wasser.

Es wurden stabile in situ formulierte Polyurethan-Dispersionen mit folgender Charakteristik erhalten:

| Variante | Feststoffgehalt | Viskosität - Brookfield |
|---|---|---|
| A | ca. 81 Gew.-% | 1 500 mPa·s (20°C) |
| B | ca. 79 Gew.-% | 500 mPa·s (20°C) |
| C | ca. 77 Gew.-% | 200 mPa·s (20°C) |
| D | ca. 75 Gew.-% | 60 mPa·s (20°C) |

### Beispiel 13

### Lösemittelfreie und in situ formulierte Polyurethan-Dispersionen mit hohem Feststoffgehalt auf Basis eines Polypropylenglykols der Molekularmasse 3 000 Dalton

Die Synthese des Prepolymers erfolgte in Analogie zu Beispiel 1

### Variante A1

100,00 g des Prepolymers wurden dann unter intensivem Rühren in einem vorab hergestellten Gemisch aus 70,00 g demineralisiertem Wasser, 120,00 g Durcal 10 (Fa. Omya), 80,00 g Barytmehl N (Fa. Sachtleben Chemie), 0,25 g Narlex LD 36 V (Fa. National Starch) dispergiert und anschließend zum Aufbau der Polyurethan-Dispersion mit 75 Equivalent-% an Ethylendiamin kettenverlängert und mit 5 Equivalent-% an Isopropylamin kettengestoppt.

### Varianten B1, C1 und D1

Die Herstellung erfolgte in Analogie zu Variante A1, jedoch mit 80,00 g (Variante B1), 90,00 g (Variante C1) bzw. 100,00 g (Variante D1) an demineralisiertem Wasser.

### Varianten A2, B2, C2 und D2

Die Herstellung erfolgte in Analogie zu den Varianten A1 - D1, jedoch wurden zusätzlich 0,60 g Tylose H 300 P (Fa. Hoechst) im Dispergier-Medium vorgelegt.

Es wurden stabile in situ formulierte Polyurethan-Dispersionen mit folgender Charakteristik erhalten:

| Variante | Feststoffgehalt | Viskosität - Brookfield |
|---|---|---|
| A1 | ca. 81 Gew.-% | 1 100 mPa·s (20°C) |
| B1 | ca. 79 Gew.-% | 550 mPa·s (20°C) |
| C1 | ca. 77 Gew.-% | 150 mPa·s (20°C) |
| D1 | ca. 75 Gew.-% | 60 mPa·s (20°C) |
| A2 | ca. 81 Gew.-% | 16 000 mPa·s (20°C) |
| B2 | ca. 79 Gew.-% | 8 000 mPa·s (20°C) |
| C2 | ca. 77 Gew.-% | 3 800 mPa·s (20°C) |
| D2 | ca. 75 Gew.-% | 2 200 mPa·s (20°C) |

### Beispiel 14

### Lösemittelfreie und in situ formulierte Polyurethan-Dispersion mit hohem Feststoffgehalt auf Basis von Polypropylenglykolen der Molekularmassen 3 000 und 4 000 Dalton

Die Synthese des Prepolymers erfolgte in Analogie zu Beispiel 2

### Variante A

Nach dem Abkühlen auf 50EC wurden 129,98 g des Prepolymers mit 90 Equivalent-% an Triethylamin direkt neutralisiert.

100,00 g des Prepolymers wurden dann unter intensivem Rühren in einem vorab hergestellten Gemisch aus 70,00 g demineralisiertem Wasser, 120,00 g Durcal 10 (Fa. Omya), 80,00 g Barytmehl N (Fa. Sachtleben Chemie), 0,25 g Narlex LD 36 V (Fa. National Starch) dispergiert und anschließend zum Aufbau der Polyurethan-Dispersion mit 80 Equivalent-% an Ethylendiamin kettenverlängert.

### Varianten B, C und D

Die Herstellung erfolgte in Analogie zu Variante A, jedoch mit 80,00 g (Variante B), 90,00 g (Variante C) bzw. 100,00 g (Variante D) an demineralisiertem Wasser.

Es wurden stabile in situ formulierte Polyurethan-Dispersionen mit folgender Charakteristik erhalten:

| Variante | Feststoffgehalt | Viskosität - Brookfield |
|---|---|---|
| A | ca. 81 Gew.-% | 11 000 mPa·s (20°C) |
| B | ca. 79 Gew.-% | 1 100 mPa·s (20°C) |
| C | ca. 77 Gew.-% | 400 mPa·s (20°C) |
| D | ca. 75 Gew.-% | 200 mPa·s (20°C) |

### Beispiel 15

### Lösemittelfreie und in situ formulierte Polyurethan-Dispersionen mit hohem Feststoffgehalt auf Basis von Polypropylenglykolen der Molekularmassen 3000 und 4000 Dalton

Die Synthese des Prepolymers erfolgte in Analogie zu Beispiel 2

### Variante A1

Nach dem Abkühlen auf 50°C wurden 129,98 g des Prepolymers mit 80 Equivalent-% an Triethylamin direkt neutralisiert.

100,00 g des Prepolymers wurden dann unter intensivem Rühren in einem vorab hergestellten Gemisch aus 70,00 g demineralisiertem Wasser, 120,00 g Durcal 10 (Fa. Omya), 80,00 g Barytmehl N (Fa. Sachtleben Chemie), 0,25 g Narlex LD 36 V (Fa. National Starch) dispergiert und anschließend zum Aufbau der Polyurethan-Dispersion mit 80 Equivalent-% an Ethylendiamin kettenverlängert.

### Varianten B1, C1 und D1

Die Herstellung erfolgte in Analogie zu Variante A1, jedoch mit 80,00 g (Variante B1), 90,00 g (Variante C1) bzw. 100,00 g (Variante D1) an demineralisiertem Wasser.

### Varianten A2, B2, C2 und D2

Die Herstellung erfolgte in Analogie zu den Varianten A1 B D1, jedoch wurden zusätzlich 0,60 g Tylose H 300 P (Fa. Hoechst) im Dispergier-Medium vorgelegt. Es wurden stabile in situ formulierte Polyurethan-Dispersionen mit folgender Charakteristik erhalten:

| Variante | Feststoff-Gehalt | Viskosität - Brookfield |
|---|---|---|
| A1 | ca. 81 Gew.-% | 2000 mPa·s (20°C) |
| B1 | ca. 79 Gew.-% | 500 mPa·s (20°C) |
| C1 | ca. 77 Gew.-% | 100 mPa·s (20°C) |
| D1 | ca. 75 Gew.-% | 25 mPa·s (20°C) |
| A2 | ca. 81 Gew.-% | 16 000 mPa·s (20°C) |
| B2 | ca. 79 Gew.-% | 6 000 mPa·s (20°C) |
| C2 | ca. 77 Gew.-% | 3 000 mPa·s (20°C) |
| D2 | ca. 75 Gew.-% | 2 000 mPa·s (20°C) |

### Beispiel 16

### Lösemittelfreie und in situ formulierte Polyurethan-Dispersion mit hohem Feststoffgehalt auf Basis eines Polypropylenglykols der Molekularmasse 2 000 Dalton

Die Synthese des Prepolymers erfolgte in Analogie zu Beispiel 3

### Variante A

100,00 g des Prepolymers wurden dann unter intensivem Rühren in einem vorab hergestellten Gemisch aus 70,00 g demineralisiertem Wasser, 120,00 g Durcal 10 (Fa. Omya), 80,00 g Barytmehl N (Fa. Sachtleben Chemie), 0,25 g Narlex LD 36 V (Fa. National Starch) dispergiert und anschließend zum Aufbau der Polyurethan-Dispersion mit 80 Equivalent-% an Ethylendiamin kettenverlängert.

### Varianten B, C und D

Die Herstellung erfolgte in Analogie zu Variante A, jedoch mit 80,00 g (Variante B), 90,00 g (Variante C) bzw. 100,00 g (Variante D) an demineralisiertem Wasser. Es wurden stabile in situ formulierte Polyurethan-Dispersionen mit folgender Charakteristik erhalten:

| Variante | Feststoffgehalt | Viskosität - Brookfield |
|---|---|---|
| A | ca. 81 Gew.-% | 12 000 mPa·s (20°C) |
| B | ca. 79 Gew.-% | 3 600 mPa·s (20°C) |
| C | ca. 77 Gew.-% | 400 mPa·s (20°C) |
| D | ca. 75 Gew.-% | 200 mPa·s (20°C) |

### Tabelle 5

Mechanische Eigenschaften in situ formulierten Polyurethan-Filmen auf Basis der Beispiele 12 - 16

| Beispiel | Zugfestigkeit σ_{M} | Dehnung bei der Zugfestigkeit ε_{M} |
|---|---|---|
| 12 A | 5,3 MPa | 46% |
| 13 A1 | 5,5 MPa | 56 % |
| 13 A2 | 5,0 MPa | 44 % |
| 14 A | 6,2 MPa | 50 % |
| 15 A1 | 5,7 MPa | 48 % |
| 15 A2 | 5,3 MPa | 40 % |
| 16 A | 7,8 MPa | 16 % |

### Beispiel 17

### Lösemittelfreie und in situ formulierte Polyurethan-Dispersionen mit hohem Feststoffgehalt auf Basis von Polypropylenglykolen der Molekularmassen 3 000 und 4 000 Dalton

Die Synthese des Prepolymers erfolgte in Analogie zu Beispiel 2

### Variante A

Nach dem Abkühlen auf 50°C wurden 129,98 g des Prepolymers mit 90 Equivalent-% an Triethylamin direkt neutralisiert.

120,00 g des Prepolymers wurden dann unter intensivem Rühren in einem vorab hergestellten Gemisch aus 110,00 g demineralisiertem Wasser, 150,00 g Titandioxid (Handelsname TiONa® der Fa. SCM Chemicals), 0,40 g Narlex LD 36 V (Fa. National Starch) dispergiert und anschließend zum Aufbau der Polyurethan-Dispersion mit 80 Equivalent-% an Ethylendiamin kettenverlängert.

### Variante B

Nach dem Abkühlen auf 50°C wurden 129,98 g des Prepolymers mit 80 Equivalent-% an Triethylamin direkt neutralisiert.

120,00 g des Prepolymers wurden dann unter intensivem Rühren in einem vorab hergestellten Gemisch aus 110,00 g demineralisiertem Wasser, 150,00 g Titandioxid (Handelsname TiONa® der Fa. SCM Chemicals), 0,40 g Narlex LD 36 V (Fa. National Starch) dispergiert und anschließend zum Aufbau der Polyurethan-Dispersion mit 80 Equivalent-% an Ethylendiamin kettenverlängert.

Es wurden stabile in situ formulierte Polyurethan-Dispersionen mit folgender Charakteristik erhalten:

| Variante | Feststoffgehalt | Viskosität - Brookfield |
|---|---|---|
| A | ca. 71 Gew.-% | 10 000 mPa·s (20°C) |
| B | ca. 71 Gew.-% | 15 000 mPa·s (20°C) |

**Tabelle 6**

| Mechanische Eigenschaften von in situ formulierten Polyurethan-Filmen auf Basis des Beispiels 17 | | |
|---|---|---|
| Variante | A | B |
| Spannung bei 100% Dehnung σ₁₀₀ | 5,0 MPa | 4,3 MPa |
| Spannung bei 300% Dehnung σ₃₀₀ | 8,6 MPa | 6,1 MPa |
| Spannung bei 500% Dehnung σ₅₀₀ | 10,0 MPa | - |
| Zugfestigkeit σ_{M} | 10,6 MPa | 6,5 MPa |
| Dehnung bei der Zugfestigkeit (ε_{M}) | 552 % | 384 % |

Die beschriebenen Beispiele zeigen, daß die Materialeigenschaften der erfindungsgemäßen Polyurethan-Dispersionen je nach Anforderung über weite Bereiche variiert werden können. Bei den reinen Polyurethan-Dispersionen liegen die Materialeigenschaften deutlich über denen vergleichbarer Polyurethan-Dispersionen des Standes der Technik, die durch den Prepolymer Mixing Process hergestellt wurden. Bei den in situ formulierten Polyurethan-Dispersionen können nahezu beliebige Füllgrade in Kombination mit hervorragenden Materialeigenschaften erzielt werden.

## Patentansprüche

1. Lösemitteifreie Polyurethan-Dispersion mit einem hohen Feststoffgehalt an Polyurethan-Polymer oder Füllstoffen mit einem Feststoffgehalt an Polyurethan-Polymer von 40 bis 70 Gew.-%, bezogen auf die Gesamtmenge einer reinen Polyurethan-Dispersion, weiche dadurch erhältlich ist, dass man
a) 10 bis 50 Gew.-% einer höhermolekularen Polyol-Komponente (A) (i), die mindestens zwei gegenüber Polyisocyanaten reaktive Hydroxylgruppen und eine Molekularmasse von 500 bis 6 000 Dalton aufweist, sowie ggf. 0,5 bis 5 Gew.-% einer niedermolekularen Polyol-Komponente (A) (ii), die mindestens zwei gegenüber Polyisocyanaten reaktive Hydroxylgruppen und eine Molekularmasse von 60 bis 150 Dalton aufweist, mit 5 bis 25 Gew.-% einer Polyisocyanat-Komponente (B), bestehend aus mindestens einem Polyisocyanat, Polyisocyanat-Derivat oder Polyisocyanat-Homologen mit mindestens zwei aliphatischen und/oder aromatischen lsocyanatgruppen ggf. in Gegenwart eines Katalysators zu einem Polyurethan-Preaddukt reagieren lässt, danach
b) das Polyurethan-Preaddukt aus Stufe a) mit 0,5 bis 5 Gew.-% einer niedermolekularen und anionisch modifizierbaren Polyol-Komponente (A) (iii), die mindestens zwei gegenüber Polyisocyanaten reaktive Hydroxylgruppen und mindestens eine gegenüber Polyisocyanaten inerte Carboxylgruppe, die in Gegenwart von Basen in eine Carboxylatgruppe überführt werden kann, aufweist, zum entsprechenden Prepolymer umsetzt,
c) das Prepolymer aus Stufe b) mit 0,25 bis 2,5 Gew.-% einer Neutralisations-Komponente (C) zur vollständigen oder teilweisen Neutralisation der Carboxylgruppen reagieren lässt, anschließend oder gleichzeitig
d) das neutralisierte Prepolymer aus Stufe c) in 10 bis 60 Gew.-% Wasser, das ggf. noch 10 bis 70 Gew.-% einer Formulierungs-Komponente (F) ausgewählt aus Füllstoffen, Pigmenten, Weichmachern, Fasermaterialien und/oder sonstigen üblichen Additiven enthält, dispergiert, im Anschluss daran
e) die Dispersion aus Stufe d) mit 0,25 bis bis 2,5 Gew.-% einer Kettenverlängerungs-Komponente (D) bestehend aus mindestens einem Polyamin, das mindestens zwei gegenüber Polyisocyanaten reaktive Aminogruppen aufweist, zur Umsetzung bringt, und
f) ggf. die Dispersion aus Stufe e) mit 0,05 bis 0,5 Gew.-% einer Kettenstopper-Komponente (E) ausgewählt aus mindestens einem Monoamin, das eine gegenüber Polyisocyanaten reaktive Aminogruppe aufweist, reagieren lässt.

2. Polyurethan-Dispersion nach Anspruch 1,
**dadurch gekennzeichnet,**
**daß** die Polyol-Komponente (A) (i) ein Polyether- und/oder Polyester-Polyol umfaßt.

3. Polyurethan-Dispersion nach Anspruch 1 oder 2,
**dadurch gekennzeichnet,**
**daß** die Polyol-Komponente (A) (i) polymere Polyole wie Polyalkylenglykole, aliphatische und/oder aromatische Polyester, Polycaprolactone, Polycarbonate, Makromonomere, Telechele oder Epoxidharze oder Gemische davon umfaßt.

4. Polyurethan-Dispersion nach einem der Ansprüche 1 bis 3,
**dadurch gekennzeichnet,**
**daß** die Komponente (A) (i) lineare bzw. difunktionelle Polypropylenglykole mit einer Molekularmasse von 3 000 bis 4 000 Dalton umfaßt.

5. Polyurethan-Dispersion nach einem der Ansprüche 1 bis 4,
**dadurch gekennzeichnet,**
**daß** die Komponente (A) (i) lineare bzw. difunktionelle aliphatische und/oder aromatische Polyester-Polyole mit einer Molekularmasse von 1 000 bis 3 000 Dalton umfaßt.

6. Polyurethan-Dispersion einem der Ansprüche 1 bis 5,
**dadurch gekennzeichnet,**
**daß** die Komponente (A) (iii) eine Bishydroxyalkancarbonsäure umfaßt.

7. Polyurethan-Dispersion nach Anspruch 6,
**dadurch gekennzeichnet,**
**daß** die Bishydroxyalkancarbonsäure 2-Hydroxymethyl-2-methyl-3-hydroxypropionsäure ist.

8. Polyurethan-Dispersion nach einem der Ansprüche 1 bis 7,
**dadurch gekennzeichnet,**
**daß** die Komponente (A)(iii) eine Molekularmasse von 100 bis 200 Dalton aufweist.

9. Polyurethan-Dispersion nach einem der Ansprüche 1 bis 8,
**dadurch gekennzeichnet,**
**daß** die Reaktionsstufen a) und b) bei einer Temperatur von 60 bis 120°C durchgeführt werden.

10. Polyurethan-Dispersion nach Anspruch 9,
**dadurch gekennzeichnet,**
**daß** die Reaktionsstufen a) und b) bei einer Temperatur von 80 bis 100°C durchgeführt werden.

11. Polyurethan-Dispersion nach einem der Ansprüche 1 bis 10,
**dadurch gekennzeichnet,**
**daß** das NCO/OH-Equivalent-Verhältnis der Komponenten (B) und (A) in den Stufen a) und b) auf einen Wert von 1,5 bis 2,5, vorzugsweise 1,8 bis 2,2, eingestellt wird.

12. Polyurethan-Dispersion nach einem der Ansprüche 1 bis 11,
**dadurch gekennzeichnet,**
**daß** die Reaktionsstufe a) in Gegenwart von 0,01 bis 1 Gew.-% bezogen auf die Komponenten (A) und (B) eines für Polyadditionsreaktionen an Polyisocyanaten üblichen Katalysators durchgeführt wird.

13. Polyurethan-Dispersion nach einem der Ansprüche 1 bis 12,
**dadurch gekennzeichnet,**
**daß** die Reaktionsstufe c) bei einer Temperatur von 40 bis 60°C, vorzugsweise bei ca. 50°C, vorgenommen wird.

14. Polyurethan-Dispersion nach einem der Ansprüche 1 bis 13,
**dadurch gekennzeichnet,**
**daß** die Neutralisations-Komponente (C) in einer solchen Menge zugegeben wird, daß der Neutralisationsgrad bezogen auf die freien Carboxylgruppen des Polyurethan-Prepolymers bei 70 bis 100 Equivaient-%, vorzugsweise bei 80 bis 90 Equivalent-%, liegt.

15. Polyurethan-Dispersion nach einem der Ansprüche 1 bis 14,
**dadurch gekennzeichnet,**
**daß** die Neutralisations-Komponente (C) tertiäre Amine, Ammoniak und/oder Alkalihydroxide umfaßt.

16. Polyurethan-Dispersion nach einem der Ansprüche 1 bis 15,
**dadurch gekennzeichnet,**
**daß** die Neutralisations-Komponente (C) Triethylamin umfaßt.

17. Polyurethan-Dispersion nach einem der Ansprüche 1 bis 16,
**dadurch gekennzeichnet,**
**daß** die Reaktionsstufe d) bei 30 bis 50°C, vorzugsweise bei ca. 40°C, durchgeführt wird.

18. Polyurethan-Dispersion nach einem der Ansprüche 1 bis 17,
**dadurch gekennzeichnet,**
**daß** die Stufen c) und d) in der Weise zusammengefaßt werden,
**daß** die Neutralisations-Komponente (C) dem zur Dispergierung des Prepolymers entsprechend der Reaktionsstufe d) verwendeten Wasser zugesetzt wird.

19. Polyurethan-Dispersion nach einem der Ansprüche 1 bis 18,
**dadurch gekennzeichnet,**
**daß** die sonstigen Additive in der Reaktionsstufe d) aus Dispergierhilfsmitteln, Rheologiehilfsmitteln, Entschäumern, Haftvermittlern, Frostschutzmitteln, Flammschutzmitteln, Bakteriziden, Fungiziden, Konservierungsmitteln oder weiteren Polymeren bzw. Polymer-Dispersionen ausgewählt sind.

20. Polyurethan-Dispersion nach einem der Ansprüche 1 bis 19,
**dadurch gekennzeichnet,**
**daß** die Formulierungs-Komponente (F) vor der Dispergierung gemäß Reaktionsstufe d) ganz oder teilweise in das Polyurethan-Prepolymer eingerührt wird.

21. Polyurethan-Dispersion nach einem der Ansprüche 1 bis 20,
**dadurch gekennzeichnet,**
**daß** die Kettenverlängerungs-Komponente (D) in einer solchen Menge eingesetzt wird, daß der Kettenverlängerungsgrad bezogen auf die freien Isocyanatgruppen des Polyurethan-Prepolymers bei 50 bis 100 Equivalent-%, vorzugsweise bei 70 bis 80 Equivalent-%, liegt.

22. Polyurethan-Dispersion nach einem der Ansprüche 1 bis 21,
**dadurch gekennzeichnet,**
**daß** die Kettenverlängerungs-Komponente (D) ein difunktionelles primäres Amin umfaßt.

23. Polyurethan-Dispersion nach Anspruch 22,
**dadurch gekennzeichnet,**
**daß** das difunktionelle primäre Amin 1,2-Diaminoethan ist.

24. Polyurethan-Dispersion nach einem der Ansprüche 1 bis 23,
**dadurch gekennzeichnet,**
**daß** die Kettenstopper-Komponente (E) in einer solchen Menge eingesetzt wird, daß der Kettenstoppungsgrad bezogen auf die freien Isocyanatgruppen des Polyurethan-Prepolymers bei 1 bis 20 Equivalent-%, vorzugsweise bei 5 bis 10 Equivalent-%, liegt.

25. Polyurethan-Dispersion nach den Ansprüchen 1 bis 24,
**dadurch gekennzeichnet,**
**daß** die Kettenstopper-Komponente (E) ein monofunktionelles primäres Amin umfaßt.

26. Polyurethan-Dispersion nach Anspruch 25,
**dadurch gekennzeichnet,**
**daß** das monofunktionelle primäre Amin 2-Aminopropan ist.

27. Polyurethan-Dispersion nach einem der Ansprüche 1 bis 26,
**dadurch gekennzeichnet,**
**daß** im Anschluß an die Reaktionsstufen e) und f) evtl. noch vorhandene freie NCO-Gruppen mit Wasser vollständig kettenverlängert werden.

28. Polyurethan-Dispersion nach einem der Ansprüche 1 bis 27,
**dadurch gekennzeichnet,**
**dass** der Feststoff-Gehalt an Polyurethan-Polymer auf 50 bis 60 Gew.-%, bezogen auf die Gesamtmenge einer reinen Polyurethan-Dispersion eingestellt ist.

29. Polyurethan-Dispersion nach einem der Ansprüche 1 bis 28,
**dadurch gekennzeichnet,**
**daß** der Feststoff-Gehalt an Polyurethan-Polymer auf 10 bis 50 Gew.-%, vorzugsweise auf 20 bis 40 Gew.-%, und der Feststoff-Gehalt an Füllstoffen auf 10 bis 70 Gew.-%, vorzugsweise auf 20 bis 60 Gew.-%, bezogen auf die Gesamtmenge einer in situ formulierten Polyurethan-Dispersion eingestellt ist.

30. Polyurethan-Dispersion nach einem der Ansprüche 1 bis 29,
**dadurch gekennzeichnet,**
**daß** der Gehalt an Carboxylatgruppen im Polyurethan-Polymer auf 10 bis 50 meq^{.}(100 g)⁻¹, vorzugsweise auf 15 bis 35 meq^{.}(100 g)⁻¹, eingestellt ist.

31. Polyurethan-Dispersion nach einem der Ansprüche 1 bis 30,
**dadurch gekennzeichnet,**
**daß** die mittlere Partikelgröße der Micellen des Polyurethan-Polymers in der Dispersion 100 bis 500 nm, vorzugsweise 200 bis 400 nm, beträgt.

32. Polyurethan-Dispersion nach einem der Ansprüche 1 bis 31,
**dadurch gekennzeichnet,**
**daß** das Polyurethan-Polymer eine mittlere Molekularmasse von 25 000 bis 100 000 Dalton aufweist.

33. Polyurethan-Dispersion nach einem der Ansprüche 1 bis 32,
**dadurch gekennzeichnet,**
**daß** sie eine Viskosität von 10 bis 800 mPas besitzt.

34. Verfahren zur Herstellung einer lösemittelfreien Polyurethan-Dispersion mit einem Feststoffgehalt an Polyurethan-Polymer von 40 bis 70 Gew.-%, bezogen auf die Gesamtmenge einer reinen Polyurethan-Dispersion,
**dadurch gekennzeichnet,**
**dass** man
a) 10 bis 50 Gew.-% einer höhermolekularen Polyol-Komponente (A) (i), die mindestens zwei gegenüber Polyisocyanaten reaktive Hydroxylgruppen und eine Molekularmasse von 500 bis 6 000 Dalton aufweist, sowie ggf. 0,5 bis 5 Gew.-% einer niedermolekularen Polyol-Komponente (A) (ii), die mindestens zwei gegenüber Polyisocyanaten reaktive Hydroxylgruppen und eine Molekularmasse von 60 bis 150 Dalton aufweist, mit 5 bis 25 Gew.-% einer Polyisocyanat-Komponente (B), bestehend aus mindestens einem Polyisocyanat, Polyisocyanat-Derivat oder Polyisocyanat-Homologen mit mindestens zwei aliphatischen und/oder aromatischen lsocyanatgruppen ggf. in Gegenwart eines Katalysators zu einem Polyurethan-Preaddukt reagieren lässt, danach
b) das Polyurethan-Preaddukt aus Stufe a) mit 0,5 bis 5 Gew.-% einer niedermolekularen und anionisch modifizierbaren Polyol-Komponente (A) (iii), die mindestens zwei gegenüber Polyisocyanaten reaktive Hydroxylgruppen und mindestens eine gegenüber Polyisocyanaten inerte Carboxylgruppe, die in Gegenwart von Basen in eine Carboxylatgruppe überführt werden kann, aufweist, zum entsprechenden Prepolymer umsetzt,
c) das Prepolymer aus Stufe b) mit 0,25 bis 2,5 Gew.-% einer Neutralisations-Komponente (C) zur vollständigen oderteilweisen Neutralisation der Carboxylgruppen reagieren lässt, anschließend oder gleichzeitig
d) das neutralisierte Prepolymer aus Stufe c) in 10 bis 60 Gew.-% Wasser, das ggf. noch 10 bis 70 Gew.-% einer Formulierungs-Komponente (F) ausgewählt aus Füllstoffen, Pigmenten, Weichmachern, Fasermaterialien und/oder sonstigen üblichen Additiven enthält, dispergiert, im Anschluss daran
e) die Dispersion aus Stufe d) mit 0,25 bis 2,5 Gew.-% einer Kettenverlängerungs-Komponente (D) bestehend aus mindestens einem Polyamin, das mindestens zwei gegenüber Polyisocyanaten reaktive Aminogruppen aufweist, zur Umsetzung bringt, und
f) ggf. die Dispersion aus Stufe e) mit 0,05 bis 0,5 Gew.-% einer Kettenstopper-Komponente (E) ausgewählt aus mindestens einem Monoamin, das eine gegenüber Polyisocyanaten reaktive Aminogruppe aufweist, reagieren lässt.

35. Verwendung der Polyurethan-Dispersion nach einem der Ansprüche 1 bis 33 im Baubereich für einkomponentige, isocyanatfreie und lösemittelfreie Beschichtungen, Dichtstoffe, Klebstoffe, Lacke, oder Membranen für die Oberflächen von mineralischen Baustoffen, wie z. B. Beton, Gips, Zement, sowie Glas, Holz und Holzwerkstoffe, Papier, Metall und Kunststoff.

## Claims

1. A solvent-free polyurethane dispersion having a high solids content of polyurethane polymer or fillers with a solids content of polyurethane polymer of 40 to 70% by weight, based on the total amount of a pure polyurethane dispersion, which is obtainable by
a) allowing from 10 to 50% by weight of a relatively high molecular weight polyol component (A) (i) which has at least two hydroxyl groups which are reactive toward polyisocyanates and a molar mass of from 500 to 6,000 dalton plus, if desired, from 0.5 to 5% by weight of a low molecular weight polyol component (A) (ii) having at least two hydroxyl groups which are reactive toward polyisocyanates and a molar mass of from 60 to 150 dalton to react with from 5 to 25% by weight of a polyisocyanate component (B) comprising at least one polyisocyanate, polyisocyanate derivative or polyisocyanate homologue containing at least two aliphatic and/or aromatic isocyanate groups in the presence or absence of a catalyst to give a polyurethane preadduct, then
b) reacting the polyurethane preadduct from step a) with from 0.5 to 5% by weight of a low molecular weight and anionically modifiable polyol component (A) (iii) containing at least two hydroxyl groups which are reactive toward polyisocyanates and at least one carboxyl group which is inert toward polyisocyanates and can in the presence of bases be converted into a carboxylate group to give the corresponding prepolymer,
c) allowing the prepolymer from step b) to react with from 0.25 to 2.5% of a neutralisation component (C) until the carboxyl groups have been completely or partially neutralised, subsequently or simultaneously
d) dispersing the neutralised prepolymer from step c) in from 10 to 60% by weight of water which may contain from 10 to 70% by weight of a formulation component (F) selected from among fillers, pigments, plasticisers, fibrous materials and/or other customary additives, subsequently
e) reacting the dispersion from step d) with from 0.25 to 2.5% by weight of a chain extension component (D) comprising at least one polyamine having at least two amino groups which are reactive toward polyisocyanates, and
f) if desired, allowing the dispersion from step e) to react with from 0.05 to 0.5% by weight of a chain stopper component (E) selected from at least one monoamine having an amino group which is reactive toward polyisocyanates.

2. A polyurethane dispersion according to claim 1 **characterised in that** the polyol component (A) (i) comprises a polyether polyol and/or polyester polyol.

3. A polyurethane dispersion according to claim 1 or 2, **characterised in that** the polyol component (A) (i) comprises polymeric polyols such as polyalkylene glycols, aliphatic and/or aromatic polyesters, polycaprolactones, polycarbonates, macromonomers, telechelic polymers or epoxy resins or mixtures thereof.

4. A polyurethane dispersion according to any of claims 1 to 3, **characterised in that** the component (A) (i) comprises linear or bifunctional polypropylene glycols having a molar mass of from 3,000 to 4,000 dalton.

5. A polyurethane dispersion according to any of claims 1 to 4, **characterised in that** the component (A) (i) comprises linear or bifunctional aliphatic and/or aromatic polyester polyols having a molar mass of from 1,000 to 3,000 dalton.

6. A polyurethane dispersion according to any of claims 1 to 5, **characterised in that** the component (A) (iii) comprises a bishydroxyalkanecarboxylic acid.

7. A polyurethane dispersion according to claim 6, **characterised in that** the bishydroxyalkanecarboxylic acid is 2-hydroxymethyl-2-methyl-3-hydroxypropionic acid.

8. A polyurethane dispersion according to any of claims 1 to 7, **characterised in that** the component (A) (iii) has a molecular mass of from 100 to 200 dalton.

9. A polyurethane dispersion according to any of claims 1 to 8, **characterised in that** the reaction steps a) and b) are carried out at a temperature of from 60 to 120°C.

10. A polyurethane dispersion according to claim 9, **characterised in that** the reaction steps a) and b) are carried out at a temperature of from 80 to 100°C.

11. A polyurethane dispersion according to any of claims 1 to 10, **characterised in that** the NCO/OH equivalent ratio of the components (B) and (A) in steps a) and b) is set to a value in the range from 1.5 to 2.5, preferably from 1.8 to 2.2.

12. A polyurethane dispersion according to any of claims 1 to 11, **characterised in that** the reaction step a) is carried out in the presence of from 0.01 to 1% by weight, based on the components (A) and (B), of a catalyst customary for polyaddition reactions onto polyisocyanates.

13. A polyurethane dispersion according to any of claims 1 to 12, **characterised in that** the reaction step c) is carried out at a temperature of from 40 to 60°C, preferably at about 50°C.

14. A polyurethane dispersion according to any of claims 1 to 13, **characterised in that** the neutralisation component (C) is added in such an amount that the degree of neutralisation based on the free carboxyl groups of the polyurethane prepolymer is from 70 to 100 equivalent %, preferably from 80 to 90 equivalent %.

15. A polyurethane dispersion according to any of claims 1 to 14, **characterised in that** the neutralisation component (C) comprises tertiary amines, ammonia and/or alkali metal hydroxides.

16. A polyurethane dispersion according to any of claims 1 to 15, **characterised in that** the neutralisation component (C) comprises triethylamine.

17. A polyurethane dispersion according to any of claims 1 to 16, **characterised in that** the reaction step d) is carried out at from 30 to 50°C, preferably at about 40°C.

18. A polyurethane dispersion according to any of claims 1 to 17, **characterised in that** the steps c) and d) are combined by adding the neutralisation component (C) to the water used for dispersing the prepolymer as in reaction step d).

19. A polyurethane dispersion according to any of claims 1 to 18, **characterised in that** the other additives in reaction step d) are selected from among dispersants, rheological aids, antifoams, adhesion promoters, antifreezes, flame retardants, bactericides, fungicides, preservatives and further polymers and polymer dispersions.

20. A polyurethane dispersion according to any of claims 1 to 19, **characterised in that** some or all of the formulation component (F) is stirred into the polyurethane prepolymer prior to the dispersion step corresponding to reaction step d).

21. A polyurethane dispersion according to any of claims 1 to 20, **characterised in that** the chain extension component (D) is used in such an amount that the degree of chain extension based on the free isocyanate groups of the polyurethane prepolymer is from 50 to 100 equivalent %, preferably from 70 to 80 equivalent %.

22. A polyurethane dispersion according to any of claims 1 to 21, **characterised in that** the chain extension component (D) comprises a bifunctional primary amine.

23. A polyurethane dispersion according to claim 22, **characterised in that** the bifunctional primary amine is 1,2-diaminoethane.

24. A polyurethane dispersion according to any of claims 1 to 23, **characterised in that** the chain stopper component (E) is used in such an amount that the degree of chain stopping based on the free isocyanate groups of the polyurethane prepolymer is from 1 to 20 equivalent %, preferably from 5 to 10 equivalent %.

25. A polyurethane dispersion according to any of claims 1 to 24, **characterised in that** the chain stopper component (E) comprises a monofunctional primary amine.

26. A polyurethane dispersion according to claim 25, **characterised in that** the monofunctional primary amine is 2-aminopropane.

27. A polyurethane dispersion according to any of claims 1 to 26, **characterised in that** any free NCO groups still present after the reaction steps e) and f) are completely chain extended using water.

28. A polyurethane dispersion according to any of claims 1 to 27, **characterised in that** the solids content of polyurethane polymer is set to 50 to 60% by weight, based on the total amount of a pure polyurethane dispersion.

29. A polyurethane dispersion according to any of claims 1 to 28, **characterised in that** the solids content of polyurethane polymer is set to from 10 to 50% by weight, preferably from 20 to 40% by weight, and the solids content of fillers is set to from 10 to 70% by weight, preferably from 20 to 60% by weight, based on the total amount of a polyurethane dispersion formulated *in situ.*

30. A polyurethane dispersion according to any of claims 1 to 29, **characterised in that** the content of carboxylate groups in the polyurethane polymer is set to from 10 to 50 meq·(100 g)⁻¹, preferably from 15 to 35 meq·(100 g)⁻¹.

31. A polyurethane dispersion according to any of claims 1 to 30, **characterised in that** the mean particle size of the micelles of the polyurethane polymer in the dispersion is from 100 to 500 nm, preferably from 200 to 400 nm.

32. A polyurethane dispersion according to any of claims 1 to 31, **characterised in that** the polyurethane polymer has a mean molecular mass of from 25,000 to 100,000 dalton.

33. A polyurethane dispersion according to any of claims 1 to 32 which has a viscosity of from 10 to 800 mPas.

34. A process for preparing a solvent-free polyurethane dispersion having a solids content of polyurethane polymer of 40 to 70% by weight, based on the total amount of a pure polyurethane dispersion, **characterised in that**
a) from 10 to 50% by weight of a relatively high molecular weight polyol component (A) (i) which has at least two hydroxyl groups which are reactive toward polyisocyanates and a molecular mass of from 500 to 6,000 dalton plus, if desired, from 0.5 to 5% by weight of a low molecular weight polyol component (A) (ii) having at least two hydroxyl groups which are reactive toward polyisocyanates and a molecular mass of from 60 to 150 dalton is allowed to react with from 5 to 25% by weight of a polyisocyanate component (B) comprising at least one polyisocyanate, polyisocyanate derivative or polyisocyanate homologue containing at least two aliphatic and/or aromatic isocyanate groups in the presence or absence of a catalyst to give a polyurethane preadduct, then
b) the polyurethane preadduct from step a) is reacted with from 0.5 to 5% by weight of a low molecular weight and anionically modifiable polyol component (A) (iii) containing at least two hydroxyl groups which are reactive toward polyisocyanates and at least one carboxyl group which is inert toward polyisocyanates and can in the presence of bases be converted into a carboxylate group to give the corresponding prepolymer,
c) the prepolymer from step b) is allowed to react with from 0.25 to 2.5% of a neutralisation component (C) until the carboxyl groups have been completely or partially neutralised, subsequently or simultaneously
d) the neutralised prepolymer from step c) is dispersed in from 10 to 60% by weight of water which may contain from 10 to 70% by weight of a formulation component (F) selected from among fillers, pigments, plasticisers, fibrous materials and/or other customary additives, subsequently
e) the dispersion from step d) is reacted with from 0.25 to 2.5% by weight of a chain extension component (D) comprising at least one polyamine having at least two amino groups which are reactive toward polyisocyanates, and
f) if desired, allowing the dispersion from step e) to react with from 0.05 to 0.5% by weight of a chain stopper component (E) selected from at least one monoamine having an amino group which is reactive toward polyisocyanates.

35. The use of a polyurethane dispersion according to any of claims 1 to 33 in the building sector for single-component, isocyanate-free and solvent-free coatings, sealants, adhesives, paints and varnishes or membranes for the surfaces of mineral building materials such as concrete, gypsum or cement and also glass, wood and wood materials, paper, metal and plastic.

## Revendications

1. Dispersion de polyuréthane sans solvant ayant une teneur élevée en polymère polyuréthane solide ou en charges solides, avec une teneur en polymère polyuréthane solide de 40 à 70 % en masse par rapport à la quantité totale d'une dispersion de polyuréthane pure, qui peut être obtenue par un procédé selon lequel
a) on fait réagir 10 à 50 % en masse d'un constituant polyol de masse molaire élevée (A) (i) qui présente au moins deux groupes hydroxyle réagissant avec les polyisocyanates et a une masse molaire de 500 à 6 000 daltons, et éventuellement 0,5 à 5 % en masse d'un constituant polyol de faible masse molaire (A) (ii) qui présente au moins deux groupes hydroxyle réagissant avec les polyisocyanates et a une masse molaire de 60 à 150 daltons, avec 5 à 25 % en masse d'un constituant polyisocyanate (B) constitué d'au moins un polyisocyanate, dérivé de polyisocyanate ou homologue de polyisocyanate ayant au moins deux groupes isocyanate aliphatiques et/ou aromatiques, éventuellement en présence d'un catalyseur, pour obtenir un prépolymère d'addition polyuréthane, puis
b) on fait réagir le prépolymère d'addition polyuréthane de l'étape a) avec 0,5 à 5 % en masse d'un constituant polyol de faible masse molaire pouvant être modifié de façon anionique (A) (iii) qui présente au moins deux groupes hydroxyle réagissant avec les polyisocyanates et au moins un groupe carboxyle inerte vis-à-vis des polyisocyanates et pouvant être transformé en un groupe carboxylate en présence de bases, pour obtenir le prépolymère correspondant,
c) on fait réagir le prépolymère de l'étape b) avec 0,25 à 2,5 % en masse d'un constituant de neutralisation (C) pour neutraliser entièrement ou partiellement les groupes carboxyle, puis, ou en même temps,
d) on disperse le prépolymère neutralisé de l'étape c) dans 10 à 60 % en masse d'eau contenant éventuellement en outre 10 à 70 % en masse d'un constituant de formulation (F) choisi parmi des charges, des pigments, des plastifiants, des matériaux fibreux et/ou d'autres additifs classiques, puis
e) on fait réagir la dispersion de l'étape d) avec 0,25 à 2,5 % en masse d'un constituant d'allongement de chaîne (D) constitué d'au moins une polyamine contenant au moins deux groupes amino réagissant avec les polyisocyanates, et
f) on fait éventuellement réagir la dispersion de l'étape e) avec 0,05 à 0,5 % en masse d'un constituant d'interruption de chaîne (E) choisi parmi au moins une monoamine contenant un groupe amino réagissant avec les polyisocyanates.

2. Dispersion de polyuréthane selon la revendication 1, **caractérisée en ce que** le constituant polyol (A) (i) comprend un polyétherpolyol et/ou un polyesterpolyol.

3. Dispersion de polyuréthane selon la revendication 1 ou 2, **caractérisée en ce que** le constituant polyol (A) (i) comprend des polyols polymères comme des polyalkylèneglycols, des polyesters aliphatiques et/ou aromatiques; des polycaprolactones, des polycarbonates, des macromonomères, des polymères téléchéliques ou des résines époxy ou leurs mélanges.

4. Dispersion de polyuréthane selon l'une des revendications 1 à 3, **caractérisée en ce que** le constituant (A) (i) comprend des polypropylèneglycols linéaires ou difonctionnels ayant une masse molaire de 3 000 à 4 000 daltons.

5. Dispersion de polyuréthane selon l'une des revendications 1 à 4, **caractérisée en ce que** le constituant (A) (i) comprend des polyesterpolyols aliphatiques et/ou aromatiques, linéaires ou difonctionnels, ayant une masse molaire de 1 000 à 3 000 daltons.

6. Dispersion de polyuréthane selon l'une des revendications 1 à 5, **caractérisée en ce que** le constituant (A) (iii) comprend un acide dihydroxyalcanecarboxylique.

7. Dispersion de polyuréthane selon la revendication 6, **caractérisée en ce que** l'acide dihydroxyalcanecarboxylique est l'acide 2-hydroxyméthyl-2-méthyl-3-hydroxypropionique.

8. Dispersion de polyuréthane selon l'une des revendications 1 à 7, **caractérisée en ce que** le constituant (A) (iii) a une masse molaire de 100 à 200 daltons.

9. Dispersion de polyuréthane selon l'une des revendications 1 à 8, **caractérisée en ce que** les étapes de réactions a) et b) s'effectuent à une température de 60 à 120°C.

10. Dispersion de polyuréthane selon la revendication 9, **caractérisée en ce que** les étapes de réaction a) et b) s'effectuent à une température de 80 à 100°C.

11. Dispersion de polyuréthane selon l'une des revendications 1 à 10, **caractérisée en ce que** le rapport en équivalents NCO/OH des constituants (B) et (A) dans les étapes a) et b) est ajusté à une valeur de 1,5 à 2,5, de préférence de 1,8 à 2,2.

12. Dispersion de polyuréthane selon l'une des revendications 1 à 11, **caractérisée en ce que** l'étape de réaction a) s'effectue en présence de 0,01 à 1 % en masse, par rapport aux constituants (A) et (B), d'un catalyseur classique pour des réactions de polyaddition sur des polyisocyanates.

13. Dispersion de polyuréthane selon l'une des revendications 1 à 12, **caractérisée en ce que** l'étape de réaction c) s'effectue à une température de 40 à 60°C, de préférence d'environ 50°C.

14. Dispersion de polyuréthane selon l'une des revendications 1 à 13, **caractérisée en ce que** l'on ajoute le constituant de neutralisation (C) en une quantité telle que le degré de neutralisation, rapporté aux groupes carboxyle libres du prépolymère de polyuréthane, est de 70 à 100 % en équivalents, de préférence de 80 à 90 % en équivalents.

15. Dispersion de polyuréthane selon l'une des revendications 1 à 14, **caractérisée en ce que** le constituant de neutralisation (C) comprend des amines tertiaires, de l'ammoniac et/ou des hydroxydes de métaux alcalins.

16. Dispersion de polyuréthane selon l'une des revendications 1 à 15, **caractérisée en ce que** le constituant de neutralisation (C) comprend la triéthylamine.

17. Dispersion de polyuréthane selon l'une des revendications 1 à 16, **caractérisée en ce que** l'étape de réaction d) s'effectue à une température de 30 à 50°C, de préférence d'environ 40°C.

18. Dispersion de polyuréthane selon l'une des revendications 1 à 17, **caractérisée en ce que** l'on réunit les étapes c) et d) en ajoutant le constituant de neutralisation (C) à l'eau utilisée pour la dispersion du prépolymère selon l'étape de réaction d).

19. Dispersion de polyuréthane selon l'une des revendications 1 à 18, **caractérisée en ce que**, dans l'étape de réaction d), les autres additifs sont choisis parmi des dispersants, des agents de fluidité, des antimousses, des agents adhésifs, des antigels, des agents ignifuges, des bactéricides, des fongicides, des conservateurs ou d'autres polymères ou dispersions de polymères.

20. Dispersion de polyuréthane selon l'une des revendications 1 à 19, **caractérisée en ce que** l'on incorpore entièrement ou partiellement le constituant de formulation (F) dans le prépolymère de polyuréthane avant la dispersion selon l'étape de réaction d).

21. Dispersion de polyuréthane selon l'une des revendications 1 à 20, **caractérisée en ce que** l'on utilise le constituant d'allongement de chaîne (D) en une quantité telle que le degré d'allongement de chaîne, rapporté aux groupes isocyanate libres du prépolymère de polyuréthane, est de 50 à 100 % en équivalents, de préférence de 70 à 80 % en équivalents.

22. Dispersion de polyuréthane selon l'une des revendications 1 à 21, **caractérisée en ce que** le constituant d'allongement de chaîne (D) comprend une amine primaire difonctionnelle.

23. Dispersion de polyuréthane selon la revendication 22, **caractérisée en ce que** l'amine primaire difonctionnelle est le 1,2-diaminoéthane.

24. Dispersion de polyuréthane selon l'une des revendications 1 à 23, **caractérisée en ce que** l'on utilise le constituant d'interruption de chaîne (E) en une quantité telle que le degré d'interruption de chaîne, rapporté aux groupes isocyanate libres du prépolymère de polyuréthane, est de 1 à 20 % en équivalents, de préférence de 5 à 10 % en équivalents.

25. Dispersion de polyuréthane selon les revendications 1 à 24, **caractérisée en ce que** le constituant d'interruption de chaîne (E) comprend une amine primaire monofonctionnelle.

26. Dispersion de polyuréthane selon la revendication 25, **caractérisée en ce que** l'amine primaire monofonctionnelle est le 2-aminopropane.

27. Dispersion de polyuréthane selon l'une des revendications 1 à 26, **caractérisée en ce que**, après les étapes de réactions e) et f), on termine l'allongement des chaînes en faisant réagir les groupes NCO libres encore présents avec de l'eau.

28. Dispersion de polyuréthane selon l'une des revendications 1 à 27, **caractérisée en ce que** la teneur en polymère polyuréthane solide est ajustée à 50 à 60 % en masse par rapport à la quantité totale d'une dispersion de polyuréthane pure.

29. Dispersion de polyuréthane selon l'une des revendications 1 à 28, **caractérisée en ce que** la teneur en polymère polyuréthane solide est ajustée à 10 à 50 % en masse, de préférence 20 à 40 % en masse, et la teneur en charges solides est ajustée à 10 à 70 % en masse, de préférence 20 à 60 % en masse, par rapport à la quantité totale d'une dispersion de polyuréthane formulée *in situ*.

30. Dispersion de polyuréthane selon l'une des revendications 1 à 29, **caractérisée en ce que** la teneur en groupes carboxylate du polymère polyuréthane est ajustée à 10 à 50 méq·(100 g)⁻¹, de préférence à 15 à 35 méq·(100 g)⁻¹.

31. Dispersion de polyuréthane selon l'une des revendications 1 à 30, **caractérisée en ce que** la taille de particules moyenne des micelles du polymère polyuréthane dans la dispersion est de 100 à 500 nm, de préférence de 200 à 400 nm.

32. Dispersion de polyuréthane selon l'une des revendications 1 à 31, **caractérisée en ce que** le polymère polyuréthane a une masse molaire moyenne de 25 000 à 100 000 daltons.

33. Dispersion de polyuréthane selon l'une des revendications 1 à 32, **caractérisée en ce qu'**elle a une viscosité de 10 à 800 mPas.

34. Procédé de préparation d'une dispersion de polyuréthane sans solvant ayant une teneur en polymère polyuréthane solide de 40 à 70 % en masse par rapport à la quantité totale d'une dispersion de polyuréthane pure, **caractérisé en ce que**
a) on fait réagir 10 à 50 % en masse d'un constituant polyol de masse molaire élevée (A) (i) qui présente au moins deux groupes hydroxyle réagissant avec les polyisocyanates et a une masse molaire de 500 à 6 000 daltons, et éventuellement 0,5 à 5 % en masse d'un constituant polyol de faible masse molaire (A) (ii) qui présente au moins deux groupes hydroxyle réagissant avec les polyisocyanates et a une masse molaire de 60 à 150 daltons, avec 5 à 25 % en masse d'un constituant polyisocyanate (B) constitué d'au moins un polyisocyanate, dérivé de polyisocyanate ou homologue de polyisocyanate ayant au moins deux groupes isocyanate aliphatiques et/ou aromatiques, éventuellement en présence d'un catalyseur, pour obtenir un prépolymère d'addition polyuréthane, puis
b) on fait réagir le prépolymère d'addition polyuréthane de l'étape a) avec 0,5 à 5 % en masse d'un constituant polyol de faible masse molaire pouvant être modifié de façon anionique (A) (iii) qui présente au moins deux groupes hydroxyle réagissant avec les polyisocyanates et au moins un groupe carboxyle inerte vis-à-vis des polyisocyanates et pouvant être transformé en un groupe carboxylate en présence de bases, pour obtenir le prépolymère correspondant,
c) on fait réagir le prépolymère de l'étape b) avec 0,25 à 2,5 % en masse d'un constituant de neutralisation (C) pour neutraliser entièrement ou partiellement les groupes carboxyle, puis, ou en même temps,
d) on disperse le prépolymère neutralisé de l'étape c) dans 10 à 60 % en masse d'eau contenant éventuellement en outre 10 à 70 % en masse d'un constituant de formulation (F) choisi parmi des charges, des pigments, des plastifiants, des matériaux fibreux et/ou d'autres additifs classiques, puis
e) on fait réagir la dispersion de l'étape d) avec 0,25 à 2,5 % en masse d'un constituant d'allongement de chaîne (D) constitué d'au moins une polyamine contenant au moins deux groupes amino réagissant avec les polyisocyanates, et
f) on fait éventuellement réagir la dispersion de l'étape e) avec 0,05 à 0,5 % en masse d'un constituant d'interruption de chaîne (E) choisi parmi au moins une monoamine contenant un groupe amino réagissant avec les polyisocyanates.

35. Utilisation de la dispersion de polyuréthane selon l'une des revendications 1 à 33 dans le domaine de la construction pour des revêtements, enduits, colles, vernis ou membranes à un constituant, sans isocyanate et sans solvant, pour des surfaces de matériaux de construction inorganiques comme, par exemple, le béton, le plâtre, le ciment, ainsi que des surfaces de verre, de bois et de matériaux dérivés du bois, de papier, de métaux et de matières plastiques.
